(19) **Europäisches Patentamt**
**European Patent Office**
**Office européen des brevets**

(11) **EP 4 604 296 A1**

(12) **EUROPEAN PATENT APPLICATION**
published in accordance with Art. 153(4) EPC

(43) Date of publication:
**20.08.2025 Bulletin 2025/34**

(21) Application number: **23929785.6**

(22) Date of filing: **22.08.2023**

(51) International Patent Classification (IPC):
**H01M 50/30** (2021.01)      **H01M 50/103** (2021.01)
**H01M 50/342** (2021.01)

(52) Cooperative Patent Classification (CPC):
**Y02E 60/10**

(86) International application number:
**PCT/CN2023/114278**

(87) International publication number:
**WO 2024/198209 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2023 CN 202310301019**

(71) Applicant: **Contemporary Amperex Technology
(Hong Kong) Limited
Central (HK)**

(72) Inventors:
• **LEI, Yuyong**
  **Ningde, Fujian 352100 (CN)**
• **GUO, Zhijun**
  **Ningde, Fujian 352100 (CN)**
• **WANG, Peng**
  **Ningde, Fujian 352100 (CN)**
• **LI, Chuan**
  **Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **BATTERY CELL, BATTERY, AND ELECTRIC DEVICE**

(57)    Embodiments of the present application provide a battery cell, a battery, and an electrical device, and belongs to the technical field of batteries. The battery cell includes a shell and an electrode assembly. The shell includes a first wall portion. The electrode assembly is accommodated in the shell. The electrode assembly includes a first electrode plate and a second electrode plate that have opposite polarities, and the first electrode plate and the second electrode plate are stacked in a first direction. In a second direction, the first wall portion faces an edge of the first electrode plate and/or an edge of the second electrode plate; the second direction intersects with the first direction; and the first wall portion is provided with a pressure relief mechanism. When the battery cell has thermal runaway, the discharged medium generated between the first electrode plate and the second electrode plate can quickly flow to the pressure relief mechanism, which shortens time for the discharged medium to reach the pressure relief mechanism and improves the timeliness of pressure relief of the battery cell, thereby effectively improving the reliability of the battery cell.

**FIG. 6**

**Description**

**CROSS-REFERENCE TO RELATED APPLICATIONS**

The present application claims the priority of Chinese Patent Application 2023103010199 filed on March 24, 2023 and entitled "BATTERY CELL, BATTERY, AND ELECTRICAL DEVICE", the entire contents of which are incorporated herein by reference.

**TECHNICAL FIELD**

The present application relates to the technical field of batteries, and in particular, to a battery cell, a battery, and an electrical device.

**BACKGROUND**

Batteries are widely used in electrical devices, such as a mobile phone, a notebook, a battery vehicle, an electric vehicle, an electric plane, an electric ship, an electric toy car, an electric toy ship, an electric toy plane, and an electric tool.
In a battery technology, a pressure relief mechanism can be arranged in a battery cell, and pressure can be relieved through the pressure relief mechanism when the battery cell has thermal runaway. For ordinary battery cells, there is still a problem of untimely pressure relief, and the reliability of these battery cells is poor. Therefore, how to improve the reliability of a battery cell is a technical problem that needs to be urgently solved in the battery technology.

**SUMMARY OF THE INVENTION**

Embodiments of the present application provide a battery cell, a battery, and an electrical device, which can effectively improve the reliability of the battery cell.
In a first aspect, an embodiment of the present application provides a battery cell. The battery cell includes a shell and an electrode assembly. The shell includes a first wall portion. The electrode assembly is accommodated in the shell. The electrode assembly includes a first electrode plate and a second electrode plate that have opposite polarities, and the first electrode plate and the second electrode plate are stacked in a first direction. In a second direction, the first wall portion faces an edge of the first electrode plate and/or an edge of the second electrode plate; the second direction intersects with the first direction; and the first wall portion is provided with a pressure relief mechanism.
In the above technical solution, the first electrode plate and the second electrode plate are stacked in the first direction, so that the electrode assembly is a stacked electrode assembly. Since the first wall portion faces the edge of the first electrode plate and/or the edge of the second electrode plate in the second direction, and the pressure relief mechanism is arranged on the first wall portion. When the battery cell has thermal runaway, the discharged medium generated between the first electrode plate and the second electrode plate can quickly flow to the pressure relief mechanism, which shortens time for the discharged medium to reach the pressure relief mechanism and improves the timeliness of pressure relief of the battery cell, thereby effectively improving the reliability of the battery cell.
In some embodiments, in the first direction, a thickness of the electrode assembly is T, and a width of the pressure relief region of the pressure relief mechanism is D, satisfying: $D \geq 1/3 \cdot T$. In this way, the width of the pressure relief region is larger, which enlarges a pressure relief range of the pressure relief mechanism, so that discharged mediums generated by more layers of electrode plates in the electrode assembly during thermal runaway can reach the pressure relief region more quickly, and pressure inside the battery cell can be relieved more quickly during thermal runaway.
In some embodiments, $D \geq 1/2 \cdot T$. The width of the pressure relief region is further increased, and the pressure relief range of the pressure relief mechanism is further enlarged, thereby further improving the timeliness of pressure relief of the battery cell.
In some embodiments, the shell has two first outer surfaces; the two first outer surfaces are opposite to each other in the first direction; the first wall portion has a second outer surface; the two first outer surfaces are connected to the second outer surface through a filleted corner surface; and in the first direction, a distance between the two first outer surfaces is W, and a radius of the filleted corner surface is R, satisfying: $D \leq W - 2 \cdot R$. In this way, it is conductive for the pressure relief region of the pressure relief mechanism to avoid a corner region of the shell corresponding to the filleted corner surface, which lowers a difficulty of forming or mounting the pressure relief mechanism.
In some embodiments, the electrode assembly further includes a spacer; the spacer is arranged between the first electrode plate and the second electrode plate; the spacer is configured to insulate and isolate the first electrode plate from the second electrode plate; in the first direction, the width of the pressure relief region of the pressure relief mechanism is D; a thickness of the first electrode plate is $T_1$; a thickness of the second electrode plate is $T_2$; a thickness of the spacer is $T_3$; the first electrode plate is a positive electrode plate; and the quantity of layers of the first electrode plate in the electrode assembly is N, satisfying: $D \geq 1/3 \cdot N \cdot (T_1 + T_2 + 2 \cdot T_3)$. In this way, the width of the pressure relief region is larger, which enlarges a pressure relief range of the pressure relief mechanism, so that discharged mediums generated by more layers of electrode plates in the electrode assembly during thermal runaway can reach the pressure relief region more quickly, and the pressure inside the battery cell can be relieved more quickly during thermal runaway.

In some embodiments, $D \leq 4/3 \cdot N \cdot (T_1 + T_2 + 2 \cdot T_3)$. The pressure relief region of the pressure relief mechanism is not too wide. It is conductive for the pressure relief region of the pressure relief mechanism to avoid a corner region of the shell, which lowers the difficulty of forming or mounting the pressure relief mechanism.

In some embodiments, $N \cdot (T_1 + T_2 + 2 \cdot T_3) \geq D \geq 1/2 \cdot N \cdot (T_1 + T_2 + 2 \cdot T_3)$. On the one hand, the pressure relief range of the pressure relief mechanism is further enlarged, and the timeliness of pressure relief on the battery cell is further improved. On the other hand, the difficulty of forming or mounting the pressure relief mechanism is lowered.

In some embodiments, $75 \mu m \leq Ti \leq 220 \mu m$; and/or, $80 \mu m \leq T_2 \leq 250 \mu m$; and/or, $5 \mu m \leq T_3 \leq 20 \mu m$.

In some embodiments, in the second direction, a projection of the electrode assembly completely covers the pressure relief region of the pressure relief mechanism. The pressure relief region can be opposite to more layers of electrode plates in the electrode assembly in the second direction, so that discharged mediums generated by more layers of electrode plates in the electrode assembly during thermal runaway can reach the pressure relief region more quickly.

In some embodiments, the battery cell further includes a first insulating member. In the second direction, the first insulating member is at least partially arranged between the electrode assembly and the first wall portion. In this way, insulation and isolation between the electrode assembly and the first wall portion is achieved, and a probability of short circuit inside the battery cell caused by contact between the electrode assembly and the first wall portion is reduced.

In some embodiments, the first insulating member is provided with a first discharge region; and the first discharge region is configured to allow the discharged medium inside the battery cell to move from a side of the first insulating member facing away from the pressure relief mechanism to a side of the first insulating member facing the pressure relief mechanism. The arrangement of the first discharge region can reduce obstruction of the first insulating member on the discharged medium, so that the discharged medium generated by the electrode assembly can quickly reach the pressure relief mechanism through the first discharge region, thereby improving the timeliness of pressure relief on the battery cell.

In some embodiments, the first discharge region includes a first through hole provided in the first insulating member. The first discharge region has a simple structure and is easy to form. When the battery cell has thermal runaway, the discharged medium generated by the electrode assembly can quickly reach the pressure relief mechanism through the first through hole.

In some embodiments, the battery cell further includes a supporting member. In the second direction, the supporting member is at least partially arranged between the first insulating member and the first wall portion. The supporting member is configured to support the first insulating member and the electrode assembly. The supporting member can bear the gravity of the electrode assembly and the gravity of the first insulating member, and can separate the first insulating member from the first wall portion, thereby reducing impact of the electrode assembly and the first insulating member on the pressure relief mechanism and prolonging the life of the pressure relief mechanism.

In some embodiments, the supporting member is provided with a second discharge region. The second discharge region is configured to allow the discharged medium inside the battery cell to move from a side of the supporting member facing away from the pressure relief mechanism to a side of the supporting member facing the pressure relief mechanism. The arrangement of the second discharge region can reduce obstruction of the supporting member on the discharged medium, so that the discharged medium generated by the electrode assembly can quickly reach the pressure relief mechanism through the second discharge region, thereby improving the timeliness of pressure relief on the battery cell.

In some embodiments, the second discharge region includes a second through hole provided in the supporting member. The second discharge region has a simple structure and is easy to form. When the battery cell has thermal runaway, the discharged medium generated by the electrode assembly can quickly reach the pressure relief mechanism through the second through hole.

In some embodiments, the first insulating member is wrapped around the electrode assembly. Insulation between the electrode assembly and more regions of the shell is achieved, which improves the insulation performance between the electrode assembly and the shell. To assemble the battery cell, the first insulating member can first wrap around the electrode assembly, and then the first insulating member and the electrode assembly can be arranged in the shell as a whole, which can effectively lower the difficulty of assembling the battery cell.

In some embodiments, the pressure relief mechanism is integrally formed with the first wall portion. In this way, the reliability of the pressure relief mechanism is higher, so that a connection process for the pressure relief mechanism and the first wall portion is omitted, and the production costs of the battery cell can be reduced.

In some embodiments, a groove is provided in an inner surface and/or an outer surface of the first wall portion, and a bottom wall of the groove forms the pressure relief mechanism. The integrated pressure relief mechanism is formed by providing the groove in the first wall portion, so that the implementation is simple, and the production costs are low. In addition, when the groove is provided in the outer surface of the first wall portion, the groove can provide an avoidance space to open the pressure relief mechanism, to reduce a probability that the pressure relief mechanism cannot be opened because of an external obstacle.

In some embodiments, the pressure relief mechanism and the first wall portion are separately arranged, and the pressure relief mechanism is mounted on the first wall portion. The pressure relief mechanism is a component independent of the shell. The pressure relief mechanism and the shell can be produced separately and then assembled, with low production difficulty and high efficiency.

In some embodiments, the pressure relief mechanism is provided with a score groove. The score groove defines the pressure relief region. The pressure relief region is configured to be opened upon pressure relief of the battery cell. A region of the pressure relief mechanism provided with the score groove is weaker. upon pressure relief of the battery cell, the pressure relief mechanism can crack along the score groove, so that the pressure relief region defined by the score groove is opened to achieve rapid pressure relief. The pressure relief mechanism of this structure has high sensitivity and good timeliness of pressure relief.

In some embodiments, the score groove is a groove extending along a closed trajectory. In a pressure relief process, after the pressure relief mechanism cracks along the score groove, the pressure relief region can be fully opened, thereby enlarging a pressure relief area and improving the timeliness of pressure relief on the battery cell.

According to some embodiments of the present application, the shell includes a case and an end cover. The case is provided with an opening. The end cover closes the opening. The first wall portion is formed on the case. To assemble the battery cell, the electrode assembly can be put into the case through the opening of the case, and then the opening of the case is closed by the end cover, so that the battery cell is assembled conveniently and quickly. Since the first wall portion forms the case, the pressure relief mechanism is located on the case, which reduces a probability that the discharged medium discharged when the pressure relief mechanism relieves pressure inside the battery cell affects a component on an outer side of the end cover.

In some embodiments, the case includes the first wall portion, a second wall portion, a third wall portion, and a fourth wall portion. The first wall portion, the third wall portion, the second wall portion, and the fourth wall portion are connected in sequence end to end. The first wall portion and the second wall portion are opposite to each other in the second direction. The third wall portion and the fourth wall portion are opposite to each other in the first direction. The case is roughly in a shape of a quadrangular prism, has a simple structure, and is easy to form.

In some embodiments, in the second direction, a spacing between the first wall portion and the second wall portion is $L_1$; and in the first direction, a spacing between the third wall portion and the fourth wall portion is $L_2$, satisfying: $L_2 < L_1$. When the electrode assembly expands, the first wall portion and the second wall portion are less affected by the electrode assembly than that on the third wall portion and the fourth wall portion. Since the pressure relief mechanism is located on the first wall portion, a probability that the expansion of the electrode assembly blocks or damages the pressure relief mechanism can be reduced.

In some embodiments, the case is formed by bending a plate, and head and tail end portions of the plate are connected to each other in a circumferential direction of the opening. To form the case, the plate is bent, and the head and tail end portions of the plate are connected to each other. The forming mode of the case is simple, and the difficulty of forming the case can be effectively lowered.

In some embodiments, a connection position of the two end portions is staggered from the first wall portion in the circumferential direction of the opening. The connection position is not located on the first wall portion, thereby reducing impact of the connection position on the pressure relief mechanism and improving the reliability of the pressure relief mechanism.

In some embodiments, the case includes the second wall portion. In the second direction, the first wall portion and the second wall portion are opposite to each other. The connection position of the two end portions is located at the second wall portion. The pressure relief mechanism and the connection position are respectively located on the first wall portion and the second wall portion that are opposite to each other, and the pressure relief mechanism and the connection position are farther spaced apart in the circumferential direction of the opening, which further reduces the impact of the connection position on the pressure relief mechanism.

In some embodiments, the case is a cuboid case, and the opening is formed at at least one end of the case in a length direction of the case. The case of this structure has a simple structure and is easy to form.

In some embodiments, a length of the case is a; a width of the case is b; and a height of the case is c, $b \leq c \leq a/1.5$. The case is long-strip-shaped, which can meet a high-capacity requirement of the battery cell.

In some embodiments, the electrode assembly includes a plurality of first electrode plates and a plurality of second electrode plates. In the first direction, the first electrode plates and the second electrode plates are alternately arranged. In the second direction, the first wall portion faces edges of the first electrode plates and edges of the second electrode plates. In this way, when the battery cell has thermal runaway, discharged mediums generated by the first electrode plate and the second electrode plate can quickly reach the pressure relief mechanism, which shortens time for the discharged mediums to reach the pressure relief mechanism and improves the timeliness of pressure relief of the battery cell.

In some embodiments, the electrode assembly includes a plurality of first electrode plates. The second electrode plate includes bent portions and a plurality of straight portions. Two adjacent straight portions are connected to one bent portion. In the first direction, the straight portions and the first electrode plates are alternately arranged. In the second direction, the first wall portion faces edges of the first electrode plates and the bent portions of the second electrode plate. During formation, the plurality of first electrode plates can be arranged on two sides of the second electrode plate, and then the second electrode plate can be folded back and forth, so that the second electrode plate forms the straight portions and the bent portions, thereby achieving alternate arrangement of the straight portions and the first electrode plates. The forming mode of the electrode assembly is simple, and the forming efficiency is high.

In some embodiments, the first wall portion is configured to support the electrode assembly in a gravity direction. The pressure relief mechanism on the first wall portion is located at a bottom of the electrode assembly, which is conductive for the discharged medium inside the battery cell to be quickly discharged through the pressure relief mechanism by virtue of its own gravity.

In some embodiments, the first direction is perpendicular to the second direction.

In a second aspect, the embodiments of the present application provide a battery, including the battery cell provided by any embodiment of the first aspect.

In a third aspect, the embodiments of the present application provide an electrical device, including the battery cell provided by any embodiment of the first aspect. The battery cell is configured to supply electric energy to the electric device.

**BRIEF DESCRIPTION OF DRAWINGS**

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.

Fig. 1 is a schematic structural diagram of a vehicle according to some embodiments of the present application;
Fig. 2 is an exploded diagram of a battery according to some embodiments of the present application;
Fig. 3 is an axonometric drawing of a battery cell according to some embodiments of the present application;
Fig. 4 is an exploded diagram of the battery cell shown in Fig. 3;
Fig. 5 is a schematic structural diagram of the battery cell shown in Fig. 4;
Fig. 6 is an A-A sectional diagram of the battery cell shown in Fig. 5;
Fig. 7 is a partially enlarged view of part B of the battery cell shown in Fig. 6;
Fig. 8 is a partially enlarged view of part C of the battery cell shown in Fig. 7;
Fig. 9 is a partial view of the electrode assembly shown in Fig. 8;
Fig. 10 is a partially enlarged view of a battery cell according to some other embodiments of the present application;
Fig. 11 is a schematic structural diagram of a battery cell according to some other embodiments of the present application;
Fig. 12 is a D-D sectional diagram of the battery cell shown in Fig. 11;
Fig. 13 is a partially enlarged view of part E of the battery cell shown in Fig. 12;
Fig. 14 is a partially enlarged view of part F of the battery cell shown in Fig. 13;
Fig. 15 is a partially enlarged view of a battery cell according to still some other embodiments of the present application;
Fig. 16 is a partial view of a shell according to some embodiments of the present application;
Fig. 17 is a partially enlarged view of part G of the shell shown in Fig. 16;
Fig. 18 is a partially enlarged view of a shell according to some other embodiments of the present application;
Fig. 19 is a partially enlarged view of part J of the shell shown in Fig. 18;
Fig. 20 is an I-directional view of the shell shown in Fig. 16;
Fig. 21 is a schematic structural diagram of a shell according to some embodiments of the present application;
Fig. 22 is an axonometric drawing of a case shown in Fig. 21;
Fig. 23 is a schematic structural diagram of the case shown in Fig. 22;
Fig. 24 is an axonometric drawing of a case according to some other embodiments of the present application;
Fig. 25 is a schematic structural diagram of the case shown in Fig. 24;
Fig. 26 is a schematic structural diagram of the case shown in Fig. 24 after the case is unfolded;
Fig. 27 is a schematic structural diagram of an electrode assembly according to some embodiments of the present application;
Fig. 28 is a schematic structural diagram of an electrode assembly according to some other embodiments of the present application; and
Fig. 29 is a partially enlarged view of part K of the electrode assembly shown in Fig. 28.

Numerals: 1-shell; 11-case; 111-first wall portion; 1111-groove; 1112-pressure relief hole; 112-second wall portion; 1121-first end portion; 11211-first end surface; 1122-second end portion; 11221-second end surface; 1123-connection position; 113-third wall portion; 114-fourth wall portion; 115-first outer surface; 116-second outer surface; 117-filleted corner surface; 12-end cover; 2-electrode assembly; 21-tab; 22-first electrode plate; 221-first edge; 23-second electrode plate; 231-second edge; 232-bent portion; 233-straight portion; 24-spacer; 3-pressure relief mechanism; 31-pressure relief region; 32-score groove; 4-electrode terminal; 5-first insulating member; 51-first discharge region; 6-second insulating member; 7-supporting member; 71-second discharge region; 10-battery cell; 20-box body; 201-first part; 202-second part; 100-battery; 200-controller; 300-motor; 1000-vehicle; X-first direction; Y-second direction; and Z-third direction.

## DESCRIPTION OF EMBODIMENTS

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may comprise a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., $LiFePO_4$ (also abbreviated as LFP)), lithium iron phosphate-carbon composite, lithium manganese phosphate (e.g., $LiMnPO_4$), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium nickel cobalt aluminum oxide (e.g., $LiNi_{0.85}Co_{0.15}Al_{0.05}O_2$), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate can include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a polymer material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, each negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the spacer is a separator. The type of the separator is not particularly limited in the present application, and any well-known separator having good chemical stability, mechanical stability, and a porous structure may be selected.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between the positive electrode and the negative electrode, or may be attached to the surface of the positive electrode and the surface of the negative electrode.

In some embodiments, the spacer is a solid electrolyte. The solid electrolyte is arranged between the positive electrode and the negative electrode and plays a role of transmitting ions and isolates the positive electrode from the negative electrode.

In some implementations, the battery cell further includes an electrolyte. The electrolyte plays a role of conducting ions between the positive electrode and the negative electrode. The present application does not impose a specific limitation on the type of the electrolyte, and can select the electrolyte according to a need. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

For example, the composite solid electrolyte is formed by adding an inorganic solid electrolyte filler into a polymer solid electrolyte.

In some implementations, the electrode assembly is of a wound structure. The positive electrode plate and the negative electrode plate are wound into the wound structure.

In some implementations, the electrode assembly is of a laminated structure.

For example, a plurality of positive electrode plates and a plurality of negative electrode plates may be provided respectively, and the plurality of positive electrode plates and the plurality of negative electrode plates are stacked alternately.

For example, a plurality of positive electrode plates may be provided, and the negative electrode plate is folded to form a plurality of stacked straight portions. One positive electrode plate is sandwiched between adjacent straight portions.

For example, the positive electrode plate and the negative electrode plate are both folded to form a plurality of stacked straight portions.

For example, a plurality of spacers may be provided, which are respectively arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tab includes a positive tab and a negative tab.

In some implementations, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack comprises a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

For development of a battery technology, design factors of many aspects should be considered at the same time, such as energy density, cycle life, discharging capacity, charging-discharging rate, and other performance parameters. In addition, the reliability of the battery should also be considered.

In a battery technology, a pressure relief mechanism can be arranged in a battery cell to improve the reliability of the battery cell. The pressure relief mechanism on the battery cell has an important impact on the reliability of the battery. For example, in case of short circuit, overcharge, and the like, thermal runaway may occur inside the battery cell, and a pressure or a temperature may rise suddenly. In this case, an internal pressure and heat can be released to the outside through the pressure relief mechanism, to reduce a probability of explosion and fire in the battery cell.

The battery cell may use a wound electrode assembly. The wound electrode assembly may be formed by winding a positive electrode plate, a negative electrode plate, and a spacer. The pressure relief mechanism of the battery cell is generally arranged on a wall portion of the shell parallel to a winding center line of the electrode assembly. For the wound electrode assembly, a plurality of layers of electrode plates exist in a direction perpendicular to the winding center line. When a battery cell has thermal runaway, the discharged medium generated inside the electrode assembly cannot reach the pressure relief mechanism through the electrode plates in the direction perpendicular to the winding center line. The discharged medium can only be discharged from two ends of the electrode assembly along the winding center line, and then reach the pressure relief mechanism from a gap between the electrode assembly and a wall surface of the case. This causes a longer path for the discharged medium to reach the pressure relief mechanism, and even the electrode assembly blocks the pressure relief mechanism, so that the discharged medium cannot reach the pressure relief mechanism in time, causing that the battery cell cannot be relieved in time and has poor reliability.

In view of this, an embodiment of the present application provides a battery cell. The battery cell includes a shell and an electrode assembly. The shell includes a first wall portion. The electrode assembly is accommodated in the shell. The electrode assembly includes a first electrode plate and a second electrode plate that have opposite polarities, and the first electrode plate and the second electrode plate are stacked in a first direction. In a second direction, the first wall portion faces an edge of the first electrode plate and/or an edge of the second electrode plate; the second direction intersects with the first direction; and the first wall portion is provided with a pressure relief mechanism.

In this battery cell, since the first wall portion faces the edge of the first electrode plate and/or the edge of the second electrode plate in the second direction, and the pressure relief mechanism is arranged on the first wall portion. When the battery cell has thermal runaway, the discharged medium generated between the first electrode plate and the second electrode plate can quickly flow to the pressure relief mechanism, which shortens time for the discharged medium to reach the pressure relief mechanism and improves the timeliness of pressure relief of the battery cell, thereby effectively improving the reliability of the battery cell.

The technical solutions described in the embodiments of the present application are applicable to batteries and electrical devices using batteries.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

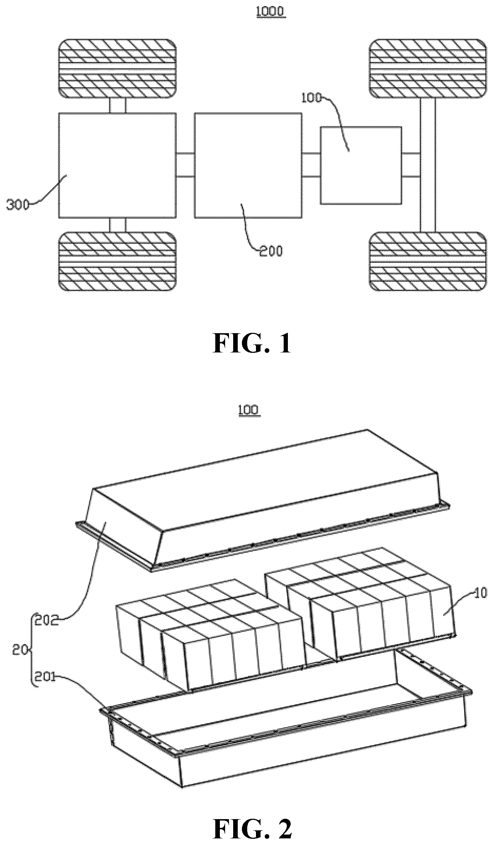

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to Fig. 2, Fig. 2 is an exploded diagram of a battery 100 according to some embodiments of the present application. The battery 100 includes a box cell 10 and a box body 20. The battery cell 10 is accommodated in the box body 20.

The box body 20 is a component for accommodating the battery cell 10, and the box body 20 provides an accommodating space for the battery cell 10. The box body 20 may be of various structures. In some embodiments, the box 20 may include a first part 201 and a second part 202. The first part 201 and the second part 202 are covered by each other to define the accommodating space for accommodating the battery cell 10. The first part 201 and the second part 202 may have a variety of shapes, such as a cuboid, a cylinder, etc. The first part 201 may be of a hollow structure with one side open, the second part 202 may also be of a hollow structure with one side open, and the open side of the second part 202 covers the open side of the first part 201, so as to form the box 20 having the accommodating space. It is also possible that the first part 201 may be of a hollow structure with one side open, the second part 202 may be a plate-like structure, and the second part 202 covers the open side of the first part 201, so as to form the box 20 having the accommodating space. The first part 201 and the second part 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. It is also possible that all the battery cells 10 are directly connected in series or in parallel or in series-parallel, and then an entirety composed of all the battery cells 10 is received in the box 20.

In some embodiments, the battery 100 further includes a bus component, and the plurality of battery cells 10 may be electrically connected to each other via the bus component, so as to implement series connection, parallel connection, or series-parallel connection of the plurality of battery cells 10. The bus component may be a metal conductor, such as copper, iron, aluminum, stainless steel, or aluminum alloy.

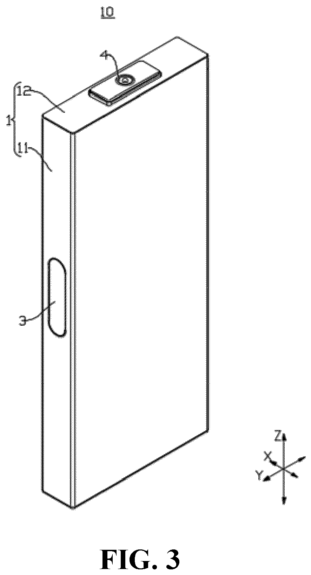

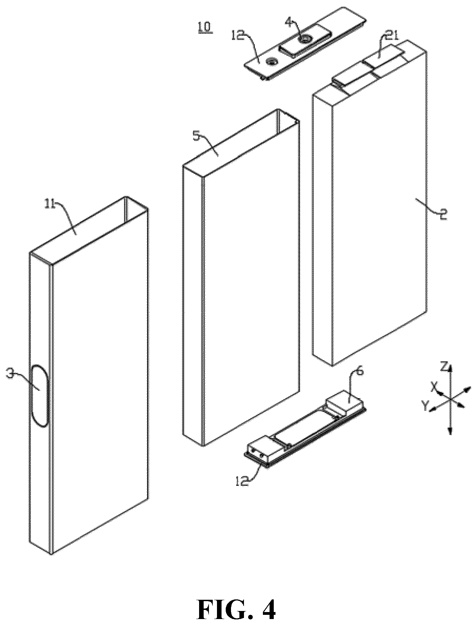

Referring to FIG. 3 and FIG. 4, Fig. 3 is an axonometric drawing of a battery cell 10 according to some embodiments of the present application, and Fig. 4 is an exploded diagram of the battery cell 10 shown in Fig. 3. The battery cell 10 may include a shell 1, an electrode assembly 2, and a pressure relief mechanism 3.

The shell 1 is configured to accommodate components, such as the electrode assembly 2 and electrolyte. For example, the shell 1 may include a case 11 and an end cover 12.

The case 11 may be of a hollow structure with an opening formed in one end, or the case 11 may be of a hollow structure with openings formed in two opposite ends. The case 11 may have various shapes, such as a cylindrical shape or a prismatic shape. The case 11 may be made of various materials, such as copper, iron, aluminum, steel, aluminum alloy, and plastic.

The end cover 12 is a component that closes the opening of the case 11 to isolate an internal environment of the battery cell 10 from an external environment. The end cover 12 and the case 11 jointly define an accommodating space for accommodating the electrode assembly 2, the electrolyte, and other components. A shape of the end cover 12 may be matched with a shape of the shell 1. For example, the case 11 is of a cuboid structure, and the end cover 12 is of a rectangular platy structure matched with the shell 1. For another example, the case 11 is of a cylindrical structure, and the end cover 12 is of a circular platy structure matched with the case 11. The case 12 may also be made of various materials, such as copper, iron, aluminum, steel, aluminum alloy, and plastic. The material of the end cover 12 and the material of the case 11 may be the same or different.

In the embodiment where the case 11 has the opening formed in one end, one end cover 12 can be correspondingly provided. In the embodiment where the case 11 has openings formed in two opposite ends, two end covers 12 can be correspondingly provided. The two end covers 12 respectively close the two openings of the case 11, and the two end covers 12 and the case 11 jointly define a receiving space.

The pressure relief mechanism 3 is a component that is arranged on the shell 1 to relieve pressure inside the battery cell 10. When the pressure inside the battery cell 10 reaches a threshold, the discharged medium inside the battery cell 10 is discharged through the pressure relief mechanism, to achieve a purpose of pressure relief. The pressure relief mechanism 3 may be arranged at the case 11 or may be arranged at the end cover 12. For example, in Fig. 3 and Fig. 4, the pressure relief mechanism 3 is arranged on the case 11.

In some embodiments, the battery cell 10 may further include an electrode terminal 4. The electrode terminal 4 is arranged at the shell 1, and the electrode terminal 4 is configured to be electrically connected to a tab 21 of the electrode assembly 2, to input or output electric energy of the battery cell 10. The electrode terminal 4 may be arranged on the case 11 of the shell 1 or may be arranged on the end cover 12 of the shell 1. The electrode terminal 4 may be directly connected to the tab 21. For example, the electrode terminal 4 is directly welded to the tab 21. The electrode terminal 4 may be indirectly connected to the tab 21. For example, the electrode terminal 4 is indirectly connected to the tab 21 through a current collecting member. The current collecting member may be a metal conductor, such as copper, iron, aluminum, steel, and aluminum alloy.

For example, as shown in Fig. 4, the case 11 is of a hollow structure with openings formed in two opposite ends. End covers 12 are arranged at the two opposite ends of the case 11. Electrode terminals 4 are arranged on the end covers 12 at the two ends of the case 11. Tabs 21 are formed at two opposite ends of the electrode assembly 2. The tab 21 at one end of the electrode assembly 2 is a positive tab, and the tab 21 at the other end of the electrode assembly 2 is a negative tab. The electrode terminal 4 on one end cover 12 is electrically connected to the positive tab, and the electrode terminal 4 on the other end cover 12 is electrically connected to the negative tab.

In some embodiments, the battery cell 10 may further include a first insulating member 5. The first insulating member 5 is arranged between the electrode assembly 2 and the case 11. The first insulating member 5 is configured to insulate and isolate the electrode assembly 2 from the case 11. The first insulating member 5 is made of an insulating material, such as rubber or plastic.

In some embodiments, the battery cell 10 may further include a second insulating member 6. The second insulating member 6 corresponds to the end cover 12. The second insulating member 6 is arranged on one side of the end cover 12 facing the electrode assembly 2. The second insulating member 6 is configured to insulate and isolate the end cover 12 from the electrode assembly 2. The second sealing member 6 is made of an insulating material, such as rubber or plastic.

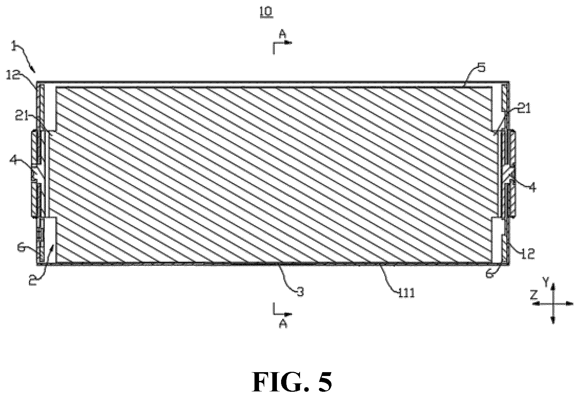

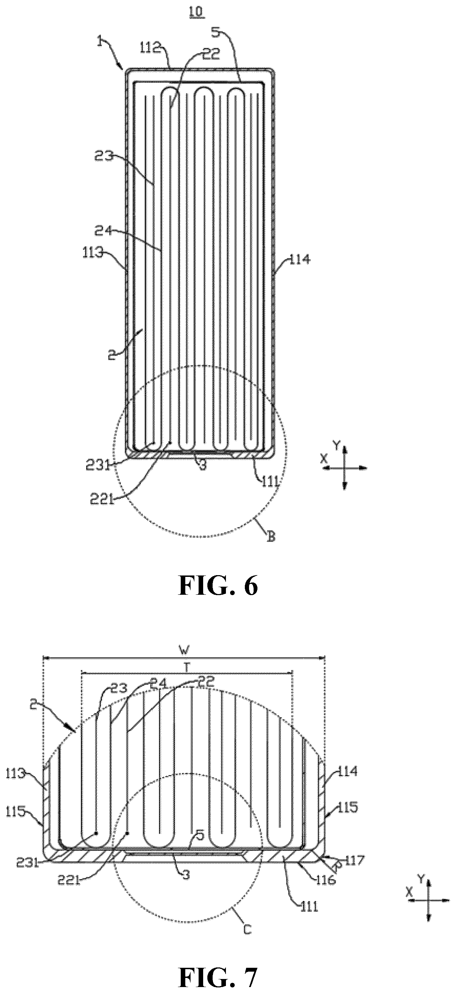

Referring to Fig. 5 and Fig. 6, Fig. 5 is a schematic structural diagram of the battery cell shown in Fig. 4, and Fig. 6 is an A-A sectional diagram of the battery cell shown in Fig. 5. An embodiment of the present application provides a battery cell 10. The battery cell 10 includes a shell 1 and an electrode assembly 2. The shell 1 includes a first wall portion 111. The electrode assembly 2 is accommodated in the shell 1. The electrode assembly 2 includes a first electrode plate 22 and a second electrode plate 23 that have opposite polarities, and the first electrode plate 22 and the second electrode plate 23 are stacked in a first direction X. In a second direction Y, the first wall portion 111 faces an edge of the first electrode plate 22 and/or an edge of the second electrode plate 23. The second direction Y intersects with the first direction X. The first wall portion 111 is provided with a pressure relief mechanism 3.

The first wall portion 111 is a wall portion of the shell 111 provided with the pressure relief mechanism 3. There may be one or a plurality of pressure relief mechanisms 3. In the embodiment where the shell 111 includes the case 11 and the end cover 12, the wall portion 13 may be a wall portion of the shell 111 or may be the end cover 12. At least one wall portion of the case 11 may serve as the first wall portion 111, or at least one end cover 12 may serve as the first wall portion 111.

The first electrode plate 22 and the second electrode plate 23 in the electrode assembly 2 are stacked, so that the electrode assembly 2 is of a laminated structure, namely, the electrode assembly 2 is a laminated electrode assembly 2. The first electrode plate 22 may be a positive electrode plate and the second electrode plate 23 may be a negative electrode plate, or the first electrode plate 22 may be a negative electrode plate and the second electrode plate 23 may be a positive electrode plate. In a third direction Z, a tab 21 is formed on at least one end of the electrode assembly 2. The tab 21 can be configured to be electrically connected to the electrode terminal 4 on the shell 1. For example, in the third direction Z, tabs 21 are formed on two ends of the electrode assembly 2, respectively a positive tab and a negative tab. The positive tab may be a portion of the positive electrode plate that is not coated with a positive electrode active material layer, and the negative tab may be a portion of the negative electrode plate that is not coated with a negative electrode active material layer.

The electrode assembly 2 may further include a spacer 24. The spacer 24 is arranged between the first electrode plate 22 and the second electrode plate 23. The spacer 24 is configured to insulate and isolate the positive electrode plate from the negative electrode plate.

The first direction X is a stacking direction of the electrode plates in the electrode assembly 2, namely, the first direction X is a stacking direction of the first electrode plate 22 and the second electrode plate 23. In the electrode assembly 2, there may be a plurality of first electrode plates 22 and a plurality of second electrode plates 23. The plurality of first electrode plates 22 and the plurality of second electrode plates 23 are stacked in the first direction X. Or, there may be one first electrode plate 22 and a plurality of second electrode plates 23. The first electrode plate 22 is of a folded structure. The first electrode plate 22 is folded to form a plurality of straight portions, and the plurality of straight portions and the plurality of second electrode plates 23 are stacked in the first direction X. Or, there may be a plurality of first electrode plates 22 and one second electrode plate 23. The second electrode plate 23 is of a folded structure. The second electrode plate 23 is folded to form a plurality of straight portions, and the plurality of straight portions and the plurality of first electrode plates 22 are stacked in the first direction X.

In the second direction Y, if the first wall portion 111 faces an edge of the first electrode plate 22, the edge of the first electrode plate 22 facing the first wall portion 111 can be defined as a first edge 221. The first edge 221 is located at one end of the first electrode plate 22 close to the first wall portion 111 in the second direction Y. If the first wall portion 111 faces an edge of the second electrode plate 23, the edge of the second electrode plate 23 facing the first wall portion 111 can be defined as a second edge 231. The second edge 231 is located at one end of the second electrode plate 23 close to the first wall portion 111 in the second direction Y. As shown in Fig. 6, an example in which the electrode assembly 2 includes a plurality of first electrode plates 22 and a plurality of second electrode plates 23, and the plurality of first electrode plates 22 and the plurality of second electrode plates 23 are stacked in the first direction X is taken. In the second direction Y, the first wall portion 111 faces the first edge 221 of the first electrode plate 22 and the second edge 231 of the second electrode plate 23.

The pressure relief mechanism 3 is a component, configured to relieve pressure inside the battery cell 10, in the battery cell 10. When the pressure inside the battery cell 10 reaches a threshold, the discharged medium inside the battery cell 10 is discharged through the pressure relief mechanism 3, to relieve the pressure inside the battery cell 10. The discharged medium includes but is not limited to: an electrolyte solution, dissolved or split positive and negative electrode plates, fragments of the spacer 24, gas generated by reactions, and the like.

The pressure relief mechanism 3 and the first wall portion 111 may be integrally formed. Or, the pressure relief mechanism 3 and the first wall portion 111 may be separately arranged. The pressure relief mechanism 3 is mounted on the first wall portion 111. For example, the pressure relief mechanism 3 is an explosion-proof plate, an explosion-proof valve, a safety valve, or the like, which is mounted on the first wall portion 111.

An angle formed by any two of the first direction X, the second direction Y, and the third direction Z may be an acute angle or a right angle. For example, every two of the first direction X, the second direction Y, and the third direction Z are perpendicular to each other.

In this embodiment of the present application, the first electrode plate 22 and the second electrode plate 23 are stacked in the first direction X, so that the electrode assembly 2 is a stacked electrode assembly 2. Since the first wall portion 111 faces the edge of the first electrode plate 22 and/or the edge of the second electrode plate 23 in the second direction Y, and the pressure relief mechanism 3 is arranged on the first wall portion 111. When the battery cell 10 has thermal runaway, the discharged medium generated between the first electrode plate 22 and the second electrode plate 23 can quickly flow to the pressure relief mechanism 3, which shortens time for the discharged medium to reach the pressure relief mechanism 3 and improves the timeliness of pressure relief of the battery cell 10, thereby effectively improving the reliability of the battery cell 10.

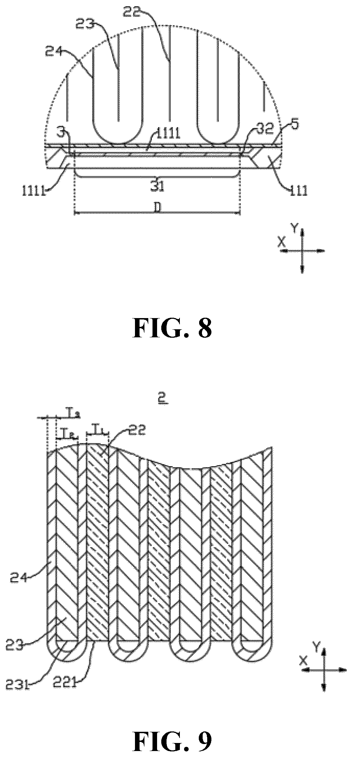

In some embodiments, referring to Fig. 7 to Fig. 8, Fig. 7 is a partially enlarged view of part B of the battery cell 10 shown in Fig. 6, and Fig. 8 is a partially enlarged view of part C of the battery cell 10 shown in Fig. 7. In the first direction X, a thickness of the electrode assembly 2 is T, and a width of the pressure relief region 31 of the pressure relief mechanism 3 is D, satisfying: $D \geq 1/3 \cdot T$.

It can be understood that a thickness direction of the electrode assembly 2 and a width direction of the pressure relief region 31 of the pressure relief mechanism 3 are consistent with the first direction X.

The pressure relief region 31 is a region that can be opened when the pressure relief mechanism 3 relieves pressure. The pressure relief region 31 may be a weak region in the pressure relief mechanism 3. For example, the pressure relief mechanism 3 is provided with a sunken groove. A region of the pressure relief mechanism 3 corresponding to the sunken groove is the weak region, and the weak region is the pressure relief region 31. The sunken groove may be a rectangular groove, a circular groove, or an elliptical groove. The rectangular groove is a groove with a rectangular cross section. The circular groove is a groove with a circular cross section. The elliptical groove is a groove with an elliptical cross section. The cross section here is perpendicular to a depth direction of the sunken groove. As shown in Fig. 8, the pressure relief region 31 may also be a region defined by the weak region of the pressure relief mechanism 3. For example, the pressure relief mechanism 3 is provided with a score groove 32. A region of the pressure relief mechanism 3 corresponding to the score groove 32 is the weak region. The score groove 32 is located at an edge of the pressure relief region 31, and the score groove 32 defines the pressure relief region 31.

It can be understood that $D/T \geq 1/3$. $D/T$ may be any point value among 1/3, 1/2, 3/5, 2/3, 1, 6/5, and 4/3 or a value of a range between any two values.

In this embodiment, $D \geq 1/3 \cdot T$, so that the width of the pressure relief region 31 is larger, which enlarges a pressure relief range of the pressure relief mechanism 3; discharged mediums generated by more layers of electrode plates in the electrode assembly 2 during thermal runaway can reach the pressure relief region 31 more quickly, and pressure inside the battery cell 10 can be relieved more quickly during thermal runaway.

In some embodiments, $D \geq 1/2 \cdot T$.

It can be understood that $D/T \geq 1/2$. $D/T$ may be any point value among 1/2, 3/5, 2/3, 4/5, 1, 6/5, and 4/3 or a value of a range between any two values.

In this embodiment, $D \geq 1/2 \cdot T$. The width of the pressure relief region 31 is further increased, and the pressure relief range of the pressure relief mechanism 3 is further enlarged, thereby further improving the timeliness of pressure relief of the battery cell 10.

In some embodiments, continuing to refer to Fig. 7, the shell 1 has two first outer surfaces 115. The two first outer surfaces 115 are opposite to each other in the first direction X. The first wall portion 111 has a second outer surface 116. The two first outer surfaces 115 are connected to the second outer surface 116 through a filleted corner surface 117. In the first direction X, a distance between the two first outer surfaces 115 is W, and a radius of the filleted corner surface 117 is R, satisfying: $D \leq W - 2 \cdot R$.

The two first outer surfaces 115 are outer surfaces of the shell 1 located on two sides in the first direction X. For example, the shell 1 further includes a third wall portion 113 and a fourth wall portion 114 that are connected to the first wall portion 111. The third wall portion 113 and the fourth wall portion 114 are opposite to each other in the first direction X. One first outer surface 115 is an outer surface of the third wall portion 113 facing away from the fourth wall portion 114, and the other first outer surface 115 is an outer surface of the fourth wall portion 114 facing away from the third wall portion 113. The distance W between the two first outer surfaces 115 in the first direction X is a size of the shell 1 in the first direction X. The first direction X being a width direction of the shell 1 is taken as an example. The distance W between the two first outer surfaces 115 in the first direction X is a width of the shell 1.

A cross section of the filleted corner surface 117 is arc-shaped. The cross section is parallel to the first direction X and the second direction Y. For example, the first outer surface 115 is perpendicular to the second outer surface 116. Both the first outer surface 115 and the second outer surface 116 are tangent to the filleted corner surface 117. A region of the shell 1 corresponding to the filleted corner surface 117 is a corner region. A region where the first wall portion 111 and the third wall portion 113 are connected forms a corner region, and a region where the first wall portion 111 and the fourth wall portion 114 are connected forms another corner region.

In this embodiment, $D \leq W - 2 \cdot R$. It is conductive for the pressure relief region 31 of the pressure relief mechanism 3 to avoid a corner region of the shell 1 corresponding to the filleted corner surface 117, which lowers a difficulty of forming or mounting the pressure relief mechanism 3. For example, the pressure relief mechanism 3 and the first wall portion 111 are integrally formed, so that the pressure relief mechanism 3 can be formed on the first wall portion 111 by avoiding the corner region, thereby lowering the difficulty of forming the pressure relief mechanism 3. For another example, the pressure relief mechanism 3 and the first wall portion 111 are separately arranged, so that the pressure relief mechanism 3 can be mounted on the first wall portion 111 by avoiding the corner region, thereby lowering the difficulty of mounting the pressure relief mechanism 3.

In some embodiments, referring to Fig. 8 and Fig. 9, Fig. 9 is a partial view of the electrode assembly 2 shown in Fig. 8. The electrode assembly 2 may further include a spacer 24. The spacer 24 is arranged between the first electrode plate 22 and the second electrode plate 23. The spacer 24 is configured to insulate and isolate the first electrode plate 22 from the second electrode plate 23. In the first direction, the width of the pressure relief region 31 of the pressure relief mechanism 3 is D; a thickness of the first electrode plate 22 is $T_1$; a thickness of the second electrode plate 23 is $T_2$; a thickness of the spacer 24 is $T_3$; the first electrode plate 22 is a positive electrode plate; and the quantity of layers of the first electrode plate 22 in the electrode assembly 2 is N, satisfying: $D \geq 1/3 \cdot N \cdot (T_1 + T_2 + 2 \cdot T_3)$.

The spacer 24 may be a separator arranged between the first electrode plate 22 and the second electrode plate 23.

The thickness $T_1$ of the first electrode plate 22 is a thickness of the first electrode plate 22 on each layer in the electrode assembly 2 in the first direction X. The thickness $T_2$ of the second electrode plate 23 is a thickness of the second electrode plate 23 on each layer in the electrode assembly 2 in the first direction X. The thickness $T_3$ of the insulating member 24 is a thickness of the insulating member 24 on each layer in the electrode assembly 2 in the first direction X.

In the electrode assembly 2, there are a plurality of first electrode plates 22. For example, the plurality of first electrode plates 22 and the plurality of second electrode plates 23 are stacked. For another example, the plurality of first electrode plates 22 and a plurality of straight portions of the second electrode plate 23 are stacked, and the quantity N of layers of the first electrode plates 22 in the electrode assembly 2 is the quantity of the first electrode plates 22. If there is one first electrode plate 22 in the electrode assembly 2, the first electrode plate 22 is folded to form a plurality of straight portions, and the plurality of straight portions are stacked with the plurality of second electrode plates 23, and the quantity N of layers of the first electrode plate 22 in the electrode assembly 2 is the quantity of the straight portions.

It can be understood that $D/(N \cdot (T_1 + T_2 + 2 \cdot T_3)) \geq 1/3$. $D/((N \cdot (T_1 + T_2 + 2 \cdot T_3))$ may be any point value among 1/3, 1/2, 3/5, 2/3, 1, 6/5, and 4/3 or a value of a range between any two values. $N \cdot (T_1 + T_2 + 2 \cdot T_3)$ is substantially equal to the thickness of the electrode assembly 2 in the first direction X. For example, $20 \leq N \leq 150$.

The inventor has conducted multiple groups of experiments. Ds in different groups are different. Explosion rates of the battery cells 10 in the groups of experiments are measured. Test results are as shown in Table I below.

A method for measuring an explosion rate of the battery cell 10 during thermal runaway includes: A small-sized heating film is arranged inside the battery cell 10. The heating film is powered up to heat the battery cell 10, until the battery cell 10 has thermal runaway. Whether the battery cell 10 explodes is observed. 1000 battery cells 10 are used in each group of experiment, and the explosion rates of the battery cells 10 are counted: explosion rate=the quantity of explosions/a total quantity $\times$100%.

Table I

| Serial number | D (mm) | N | $T_1$ (mm) | $T_2$ (mm) | $T_3$ (mm) | $D/(N\cdot(T_1+T_2+2\cdot T_3))$ | Explosion rate |
|---|---|---|---|---|---|---|---|
| 1 | 1.2 | 40 | 0.08 | 0.14 | 0.01 | 1/8 | 45% |
| 2 | 1.6 | 40 | 0.08 | 0.14 | 0.01 | 1/6 | 18% |
| 3 | 2.4 | 40 | 0.08 | 0.14 | 0.01 | 1/4 | 5% |
| 4 | 3.2 | 40 | 0.08 | 0.14 | 0.01 | 1/3 | 1% |
| 5 | 4.8 | 40 | 0.08 | 0.14 | 0.01 | 1/2 | 0.3% |
| 6 | 9.6 | 40 | 0.08 | 0.14 | 0.01 | 1 | 0.1% |
| 7 | 12.8 | 40 | 0.08 | 0.14 | 0.01 | 4/3 | 0 |

In this embodiment, $D/((N\cdot(T_1+T_2+2\cdot T_3))\geq 1/3$, so that the width of the pressure relief region 31 is larger, which enlarges a pressure relief range of the pressure relief mechanism 3; discharged mediums generated by more layers of electrode plates in the electrode assembly 2 during thermal runaway can reach the pressure relief region 31 more quickly, and pressure inside the battery cell 10 can be relieved more quickly during thermal runaway. It can be seen from Table I that when $D/(N\cdot(T_1+T_2+2\cdot T_3))\geq 1/3$, the explosion rate of the battery cell 10 during thermal runaway is lower, and the timeliness of pressure relief on the battery cell 10 during thermal runaway is better.

In some embodiments, $D\leq 4/3\cdot N\cdot(T_1+T_2+2\cdot T_3)$.

It can be understood that $D/(N\cdot(T_1+T_2+2\cdot T_3))\leq 4/3$.

If $D/(N\cdot(T_1+T_2+2\cdot T_3))$ is too large, the pressure relief region 31 of the pressure relief mechanism 3 may be too wide, and the pressure relief mechanism 3 may be located in a corner region of the shell 1. However, $D/(N\cdot(T_1+T_2+2\cdot T_3))\leq 4/3$, so that the pressure relief region 31 of the pressure relief mechanism 3 is not too wide. It is conductive for the pressure relief region 31 of the pressure relief mechanism 3 to avoid a corner region of the shell 1, which lowers the difficulty of forming or mounting the pressure relief mechanism 3.

In some embodiments, $N\cdot(T_1+T_2+2\cdot T_3)\geq D\geq 1/2\cdot N\cdot(T_1+T_2+2\cdot T_3)$.

It can be understood that $1/2\leq D/(N\cdot(T_1+T_2+2\cdot T_3))\leq 1$.

$D/((N\cdot(T_1+T_2+2\cdot T_3))$ may be any point value among 1/2, 3/5, 2/3, 7/10, 4/5, 9/10, 1 or a value of a range between any two values.

In this embodiment, $1/2\leq D/(N\cdot(T_1+T_2+2\cdot T_3))\leq 1$. On the one hand, the pressure relief range of the pressure relief mechanism 3 is further enlarged, and the timeliness of pressure relief on the battery cell 10 is further improved. On the other hand, the difficulty of forming or mounting the pressure relief mechanism 3 is lowered.

In some embodiments, $75\mu m\leq Ti\leq 220\mu m$; and/or, $80\mu m\leq T_2\leq 250\mu m$; and/or, $5\mu m\leq T_3\leq 20\mu m$.

$T_1$ may be any point value among 75 $\mu$m, 80 $\mu$m, 100 $\mu$m, 140 $\mu$m, 160 $\mu$m, 180 $\mu$m, 200 $\mu$m, and 220 $\mu$m, or a value in a range between any two values.

$T_2$ may be any point value among 80 $\mu$m, 100 $\mu$m, 140 $\mu$m, 160 $\mu$m, 180 $\mu$m, 200 $\mu$m, 220 $\mu$m, 230 $\mu$m, 240 $\mu$m, and 250 $\mu$m, or a value in a range between any two values.

$T_3$ may be any point value among 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, and 20 $\mu$m, or a value in a range between any two values.

In some embodiments, continuing to refer to Fig. 7 to Fig. 8, in the second direction Y, a projection of the electrode assembly 2 completely covers the pressure relief region 31 of the pressure relief mechanism 3.

It can be understood that, in the second direction Y, a projection of the pressure relief region 31 of the pressure relief mechanism 3 is completely located within the projection of the electrode assembly 2. In the first direction X, the pressure relief region 31 of the pressure relief mechanism 3 will not be beyond the electrode assembly 2.

For example, in the first direction X, the pressure relief region 31 of the pressure relief mechanism 3 is arranged at a middle position of the first wall portion 111, and the electrode assembly 2 is arranged at a middle position of the case 11, that is, a spacing between the electrode assembly 2 and the third wall portion 113 is basically equal to a spacing between the electrode assembly 2 and the fourth wall portion 114. A shortest distance between the electrode assembly 2 and the third wall portion 113 is the spacing between the electrode assembly 2 and the third wall portion 113. A shortest distance between the electrode assembly 2 and the fourth wall portion 114 is the spacing between the electrode assembly 2 and the fourth wall portion 114.

In this embodiment, the projection of the electrode assembly 2 in the second direction Y completely covers the pressure relief region 31 of the pressure relief mechanism 3, so that the pressure relief region 31 can be opposite to more layers of electrode plates in the electrode assembly 2 in the second direction Y, and discharged mediums generated by more layers of electrode plates in the electrode assembly 2 during thermal runaway can reach the pressure relief region 31 more quickly.

In some embodiments, continuing to refer to Fig. 7 and Fig. 8, the battery cell 10 further includes a first insulating member 5. In the second direction Y, the first insulating member 5 is at least partially arranged between the electrode assembly 2 and the first wall portion 111.

The first insulating member 5 may be partially located between the electrode assembly 2 and the first wall portion 111. For example, the first insulating member 5 is wrapped around the electrode assembly 2, and the first insulating member 5 is partially located between the electrode assembly 2 and the first wall portion 111. The first insulating member 5 may also be completely located between the electrode assembly 2 and the first wall portion 111. For example, the first insulating member 5 is of a flat plate structure arranged between the electrode assembly 2 and the first wall portion 111.

When the battery cell 10 has thermal runaway, the discharged medium generated between the first electrode plate 22 and the second electrode plate 23 is in a high-temperature state, and the discharged medium can flow to the pressure relief mechanism 3 after destroying or melting the first insulating member 5.

In this embodiment, insulation and isolation between the electrode assembly 2 and the first wall portion 111 is at least achieved through the first insulating member 5, and a probability of short circuit inside the battery cell 10 caused by contact between the electrode assembly 2 and the first wall portion 111 is reduced.

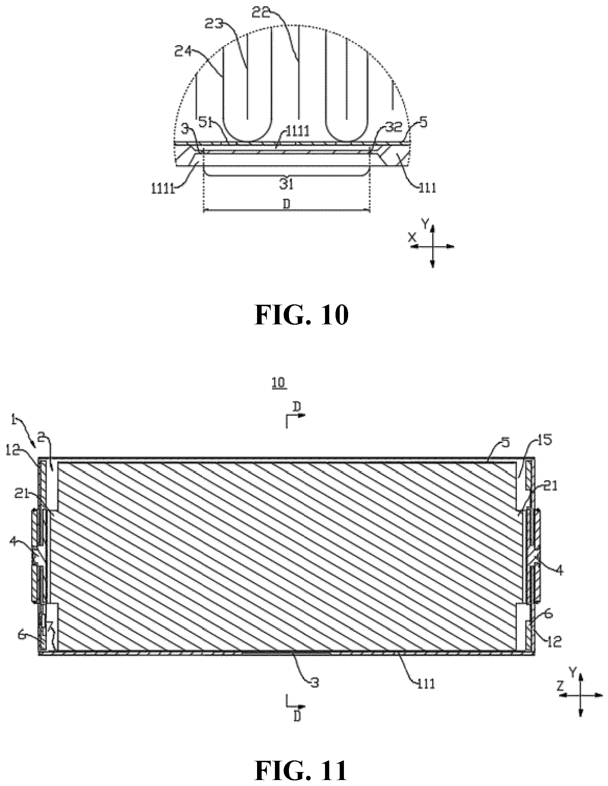

In some embodiments, referring to Fig. 10, Fig. 10 is a partially enlarged view of a battery cell 10 according to some other embodiments of the present application. The first insulating member 5 is provided with a first discharge region 51. The first discharge region 51 is configured to allow the discharged medium inside the battery cell 10 to move from a side of the first insulating member 5 facing away from the pressure relief mechanism 3 to a side of the first insulating member 5 facing the pressure relief mechanism 3.

The first discharge region 51 is arranged on a portion of the first insulating member 5 located between the first wall portion 111 and the electrode assembly 2, and the first discharge region 51 may be of various structures. For example, the first discharge region is a first through hole provided in the first insulating member 51. For another example, a first weak portion is formed on the first insulating member 5. The first weak portion defines the first discharge region 51. When the battery cell 10 has thermal runaway, the discharged medium causes the first insulating member 5 to rupture from the first weak portion, thereby opening the first discharge region 51 and forming a through hole in the opened region. The first weak portion may be formed on the first insulating member 5 by providing a groove, broken lines, or the like.

For example, in the second direction Y, a projection of the first discharge region 51 at least partially overlaps a projection of the pressure relief region 31 of the pressure relief mechanism 3. In this way, time for the discharged medium generated between the electrode plates to reach the pressure relief mechanism 3 can be further shortened.

In this embodiment, the arrangement of the first discharge region 51 can reduce obstruction of the first insulating member 5 on the discharged medium, so that the discharged medium generated by the electrode assembly 2 can quickly reach the pressure relief mechanism 3 through the first discharge region 51, thereby improving the timeliness of pressure relief on the battery cell 10.

In some embodiments, continuing to refer to Fig. 10, the first discharge region 51 includes a first through hole provided in the first insulating member 5.

In the second direction Y, the first through hole penetrates through a portion of the first insulating member 5 located between the first wall portion 111 and the electrode assembly 2. There may be one or more first through holes in the first insulating member 5.

In this embodiment, the first discharge region 51 has a simple structure and is easy to form. When the battery cell 10 has thermal runaway, the discharged medium generated by the electrode assembly 2 can quickly reach the pressure relief mechanism 3 through the first through hole.

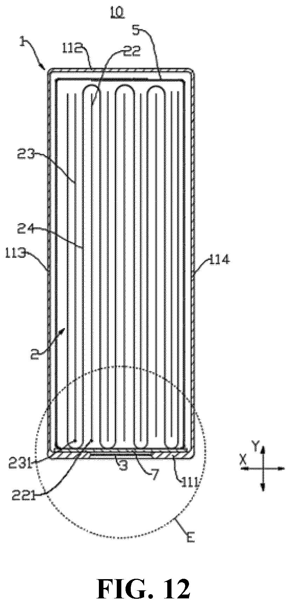

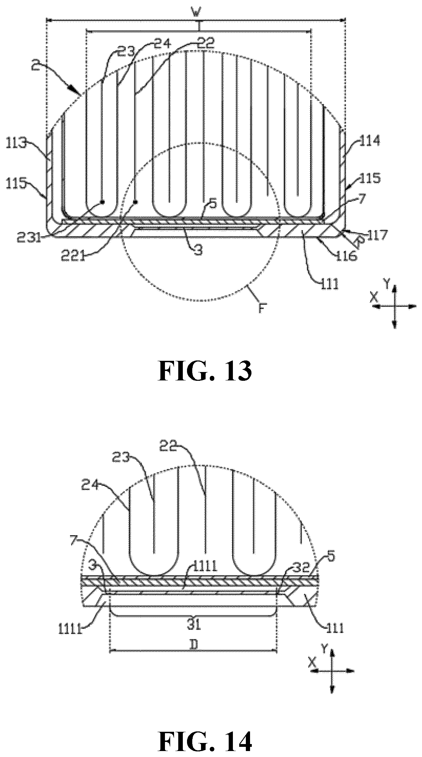

In some embodiments, referring to Fig. 11 to Fig. 14, Fig. 11 is a schematic structural diagram of a battery cell 10 according to some other embodiments of the present application; Fig. 12 is a D-D sectional diagram of the battery cell 10 shown in Fig. 11; Fig. 13 is a partially enlarged view of part E of the battery cell 10 shown in Fig. 12; and Fig. 14 is a partially enlarged view of part F of the battery cell 10 shown in Fig. 13. In some embodiments, the battery cell 10 further includes a supporting member 7. In the second direction Y, the supporting member 7 is at least partially arranged between the first insulating member 5 and the first wall portion 111. The supporting member 7 is configured to support the first insulating member 5 and the electrode assembly 2.

The supporting member 7 is a component that is arranged between the first insulating member 5 and the first wall portion 111 and supports the first insulating member 5 and the electrode assembly 2. The supporting member 7 can bear the gravity of the first insulating member 5 and the gravity of the electrode assembly 2, and the gravity of the first insulating member 5 and the gravity of the electrode assembly 2 can be transferred to the first wall portion 111 through the supporting member 7. The supporting member 7 may be partially located between the first insulating member 5 and the first wall portion 111, or may be completely located between the first insulating member 5 and the first wall portion 111. The supporting member 7 may be of a flat plate structure arranged between the first insulating member 5 and the first wall portion 111. The supporting member 7 may also be made of a metal material, such as copper, iron, aluminum, stainless steel, or aluminum alloy. The supporting member 7 may also be made of an insulating material, such as rubber or plastic, to improve the insulation performance between the electrode assembly 2 and the first wall portion 111.

It should be noted that in this embodiment, the first insulating member 5 may be or may not be provided with the first discharge region 51. As shown in Fig. 14, an example in which the first insulating member 5 is not provided with the first discharge region 51, when the battery cell 10 has thermal runaway, the discharged medium generated between the first electrode plate 22 and the second electrode plate 23 is in a high-temperature state, and the discharged medium can flow to the pressure relief mechanism 3 after destroying or melting the first insulating member 5 and the supporting member 7.

In this embodiment, the supporting member 7 can bear the gravity of the electrode assembly 2 and the gravity of the first insulating member 5, and can separate the first insulating member 5 from the first wall portion 111, thereby reducing impact of the electrode assembly 2 and the first insulating member 5 on the pressure relief mechanism 3 and prolonging the life of the pressure relief mechanism 3.

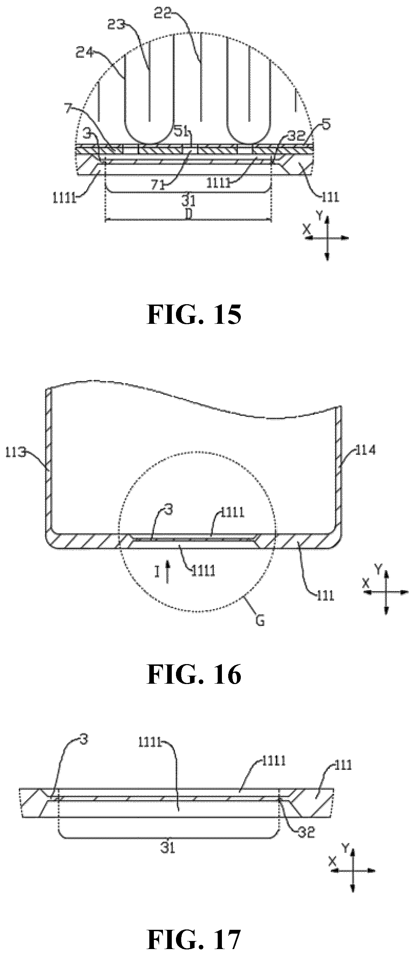

In some embodiments, referring to Fig. 15, Fig. 15 is a partially enlarged view of a battery cell 10 according to still some other embodiments of the present application. The supporting member 7 is provided with a second discharge region 71. The second discharge region 71 is configured to allow the discharged medium inside the battery cell 10 to move from a side of the supporting member 7 facing away from the pressure relief mechanism 3 to a side of the supporting member 7 facing the pressure relief mechanism 3.

The second discharge region 71 may be of various structures. For example, the second discharge region 71 is a through hole provided in the supporting member 7. For another example, a second weak portion is formed in the supporting member 7. The second weak portion defines the second discharge region 71. When the battery cell 10 has thermal runaway, the discharged medium causes the supporting member 7 to rupture from the second weak portion, thereby opening the second discharge region 71 and forming a through hole in the opened region. The second weak portion may be formed on the supporting member 7 by providing a groove, broken lines, or the like.

For example, a first discharge region 51 is arranged on the first insulating member 5, and the second discharge region 71 on the supporting member 7 corresponds to the first discharge region 51 on the first insulating member 5. In the second direction Y, a projection of the first discharge region 51 at least partially overlaps a projection of the pressure relief region 31 of the pressure relief mechanism 3.

In this embodiment, the arrangement of the second discharge region 71 can reduce obstruction of the supporting member 7 on the discharged medium, so that the discharged medium generated by the electrode assembly 2 can quickly reach the pressure relief mechanism 3 through the second discharge region 71, thereby improving the timeliness of pressure relief on the battery cell 10.

In some embodiments, continuing to refer to Fig. 15, the second discharge region 71 includes a second through hole provided in the supporting member 7.

In the second direction Y, the second through hole penetrates through the supporting member 7. There may be one or more second through holes in the supporting member 7.

For example, the first discharge region 51 includes a first through hole provided in the first insulating member 5. In the second direction Y, a projection of the first through hole at least partially overlaps a projection of the second through hole. In Fig. 15, a hole diameter of the first through hole is equal to a hole diameter of the second through hole, and a center line of the first through hole overlaps a center line of the second through hole, so that the projection of the first through hole in the second direction Y completely overlaps the projection of the second through hole in the second direction Y.

In this embodiment, the second discharge region 71 has a simple structure and is easy to form. When the battery cell 10 has thermal runaway, the discharged medium generated by the electrode assembly 2 can quickly reach the pressure relief mechanism 3 through the second through hole.

In some embodiments, continuing to refer to Fig. 11 to Fig. 13, the first insulating member 5 is wrapped around the electrode assembly 2.

For example, the first insulating member 5 is wrapped around the electrode assembly 2 around a center line extending in the third direction Z. Every two of the first direction X, the second direction Y, and the third direction Z are perpendicular to each other.

In this embodiment, the first insulating member 5 is wrapped around the electrode assembly 2, so that insulation between the electrode assembly 2 and more regions of the shell 1 is achieved, which improves the insulation performance between the electrode assembly 2 and the shell 1. To assemble the battery cell 10, the first insulating member 5 can first wrap around the electrode assembly 2, and then the first insulating member 5 and the electrode assembly 2 can be arranged in the shell 1 as a whole, which can effectively lower the difficulty of assembling the battery cell 10.

In some embodiments, continuing to refer to Fig. 16 and Fig. 17, Fig. 16 is a partial view of a shell 1 according to some embodiments of the present application, and Fig. 17 is a partially enlarged view of part G of the shell 1 shown in Fig. 16. The pressure relief mechanism 3 is integrally formed with the first wall portion 111. In this way, the reliability of the pressure relief mechanism 3 is higher, so that a connection process for the pressure relief mechanism 3 and the first wall portion 111 is omitted, and the production costs of the battery cell 10 can be reduced.

In some embodiments, continuing to refer to Fig. 16 and Fig. 17, a groove 1111 is provided in an inner surface and/or an outer surface of the first wall portion 111, and a bottom wall of the groove 1111 forms the pressure relief mechanism 3.

The inner surface of the first wall portion 111 faces an inside of the shell 1, and the outer surface of the first wall portion 111 faces an outside of the shell 1. The inner surface of the first wall portion 111 may be provided with the groove 1111, and the outer surface of the first wall portion 111 may not be provided with the groove 1111. A portion of the first wall portion 111 located between a bottom surface of the groove 1111 and the outer surface of the first wall portion 111 is the bottom wall of the groove 1111. The inner surface of the first wall portion 111 may not be provided with the groove 1111, and the outer surface of the first wall portion 111 may be provided with the groove 1111. A portion of the first wall portion 111 located between a bottom surface of the groove 1111 and the inner surface of the first wall portion 111 is the bottom wall of the groove 1111. Both the inner surface and the outer surface of the first wall portion 111 may be provided with the grooves 1111, and a portion of the first wall portion 111 located between bottom surfaces of the two grooves 1111 is the bottom wall of the groove 1111. It can be understood that the groove 1111 provided in the inner surface of the first wall portion 111 and the groove 1111 provided in the outer surface of the first wall portion 111 share one bottom wall.

A region of the first wall portion 111 that is provided with the groove 1111 is thinner. The region forms the pressure relief mechanism 3 integrally formed with the first wall portion 111.

The groove 1111 may be formed in the first wall portion 111 in various ways, such as, stamping, milling, and laser etching. The groove 1111 may be a groove in various shapes. For example, the groove 1111 may be a rectangular groove, a circular groove, or an elliptical groove. The rectangular groove is a groove with a rectangular cross section. The circular groove is a groove with a circular cross section. The elliptical groove is a groove with an elliptical cross section. The cross section here is perpendicular to a depth direction of the groove 1111.

The integrated pressure relief mechanism 3 is formed by providing the groove 1111 in the first wall portion 111, so that the implementation is simple, and the production costs are low. In addition, when the groove 1111 is provided in the outer surface of the first wall portion 111, the groove 1111 can provide an avoidance space to open the pressure relief mechanism 3, to reduce a probability that the pressure relief mechanism 3 cannot be opened because of an external obstacle.

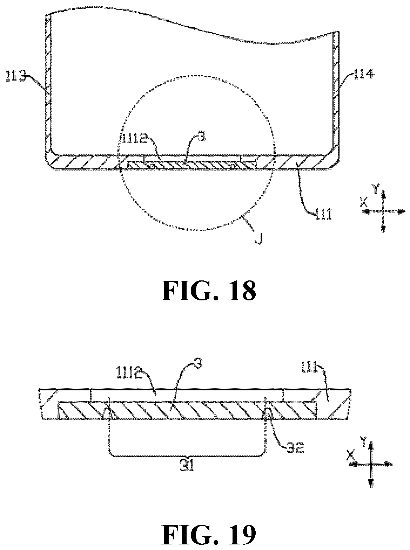

In some embodiments, referring to Fig. 18 and Fig. 19, Fig. 18 is a partially enlarged view of a shell 1 according to some other embodiments of the present application, and Fig. 19 is a partially enlarged view of part J of the shell 1 shown in Fig. 18. The pressure relief mechanism 3 and the first wall portion 111 are separately arranged, and the pressure relief mechanism 3 is mounted on the first wall portion 111.

The pressure relief mechanism 3 and the shell 1 are two separate components, which are separately molded and then mounted together. The pressure relief mechanism 3 may be an explosion-proof plate, an explosion-proof valve, a safety valve, or the like. The pressure relief mechanism 3 may be mounted on the first wall portion 111 in a bonded manner, a welded manner, or the like. The first wall portion 111 is provided with a pressure relief hole 1112, and the pressure relief mechanism 3 is mounted in the pressure relief hole 1112. When pressure inside the battery cell 10 reaches a threshold, the pressure relief mechanism 3 opens at least part of the pressure relief hole 1112, and the discharged medium inside the battery cell 10 is discharged through the pressure relief hole 1112 to relieve the pressure inside the battery cell 10.

As shown in Fig. 19, using an anti-explosion plate as the pressure relief mechanism 3 is taken as an example. The explosion-proof plate is a plate in which at least a partial region has strength less than strength of the first wall portion 111. The explosion-proof plate covers the pressure relief hole 1112, and the explosion-proof plate is welded to the first wall portion 111. When pressure inside the battery cell 10 reaches a threshold, the explosion-proof plate is at least partially destroyed, thereby opening at least part of the pressure relief hole 1112 to relieve the pressure inside the battery cell 10.

In this embodiment, the pressure relief mechanism 3 is a component independent of the shell 1. The pressure relief mechanism 3 and the shell 1 can be produced separately and then assembled, with low production difficulty and high efficiency.

In some embodiments, continuing to refer to Fig. 17 and Fig. 19, the pressure relief mechanism 3 is provided with a score groove 32. The score groove 32 defines the pressure relief region 31. The pressure relief region 31 is configured to be opened upon pressure relief of the battery cell 10.

The score groove 32 may be provided in a surface of the pressure relief mechanism 3 facing an inside of the shell 1, or may be provided in a surface of the pressure relief portion 3 facing away from an inside of the shell 1. The score groove 32 defines the pressure relief region 31. The score groove 32 is located at an edge of the pressure relief region 31. The score groove 32 may be formed in various ways, such as, stamping, milling, and laser etching. The score groove 32 may extend along a trajectory, or the score groove 32 may extend along a non-closed trajectory. For example, the score groove 32 is a groove extending along an arc-shaped trajectory, a U-shaped trajectory, or the like.

As shown in Fig. 17, in the embodiment where the pressure relief mechanism 3 and the first wall portion 111 are integrally formed, the pressure relief region 31 and the score groove 32 are both located on the bottom wall of the groove 1111.

In this embodiment, the pressure relief mechanism 3 is provided with the score groove 32. A region of the pressure relief mechanism 3 provided with the score groove 32 is weaker. upon pressure relief of the battery cell 10, the pressure relief mechanism 3 can crack along the score groove 32, so that the pressure relief region 31 defined by the score groove 32 is opened to achieve rapid pressure relief. The pressure relief mechanism 3 of this structure has high sensitivity and good timeliness of pressure relief.

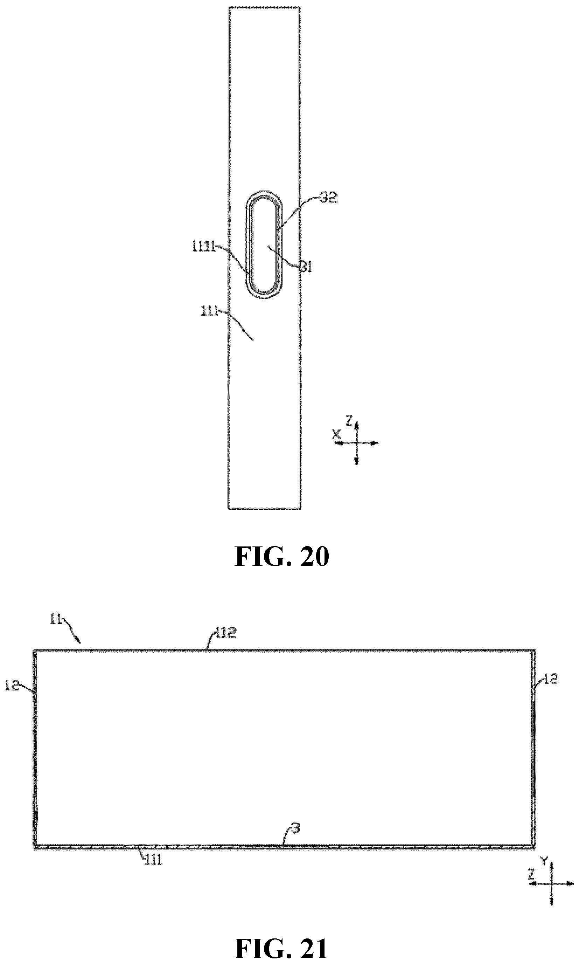

In some embodiments, referring to Fig. 20, Fig. 20 is an I-directional view of the shell 1 shown in Fig. 16. The score groove 32 is a groove extending along a closed trajectory.

The score groove 32 is an annular groove. The annular groove may be a rectangular ring groove or may be a circular ring groove. The rectangular ring groove is a groove extending along a rectangular trajectory, and the circular ring groove is a groove extending along a circular trajectory. In the embodiment shown in Fig. 20, the score groove 32 is substantially a rectangular ring groove.

In a pressure relief process, after the pressure relief mechanism 3 cracks along the score groove 32, the pressure relief region 31 can be fully opened, thereby enlarging a pressure relief area and improving the timeliness of pressure relief on the battery cell 10.

In some embodiments, Referring to Fig. 21, Fig. 21 is a schematic structural diagram of a shell 1 according to some embodiments of the present application. The shell 1 includes a case 11 and an end cover 12. The case 11 is provided with an opening. The end cover 12 closes the opening. The first wall portion 111 is formed on the case 11.

The case 11 may be provided with an opening in one end, or may be provided with openings in two opposite ends. For example, as shown in Fig. 21, the openings are formed in the two opposite ends of the case 11 in the third direction Z, and every two of the first direction X, the second direction Y, and the third direction Z may be perpendicular to each other.

The case 11 may be in a prism shape, such as a quadrangular prism shape or a hexagonal prism shape. The quadrangular prism-shaped case 11 may be a cuboid case, a square case, or the like. The end cover 12 is in one-to-one correspondence to each opening of the case 11. The end covers 12 may be connected to the case 11 in various ways. For example, the end covers 12 may be connected to the case 11 in a welded manner or a wound manner, to close the openings of the case 11. The end covers 12 may be provided with electrode terminals 4 electrically connected to the electrode assembly 2, to input or output electric energy of the battery cell 10.

To assemble the battery cell 10, the electrode assembly 2 can be put into the case 11 through the openings of the case 11, and then the openings of the case 11 are closed by the end covers 12, so that the battery cell 10 is assembled conveniently and quickly. Since the first wall portion 111 forms the case 11, the pressure relief mechanism 3 is located on the case 11, which reduces a probability that the discharged medium discharged when the pressure relief mechanism 3 relieves pressure inside the battery cell 10 affects a component on outer sides of the end covers 12. The component may be a busbar component, a detection component, or the like, which is electrically connected to the electrode terminals 4 on the end covers 12. The detection component may be a component for acquiring signals such as current, voltage, and temperature of the battery cell 10.

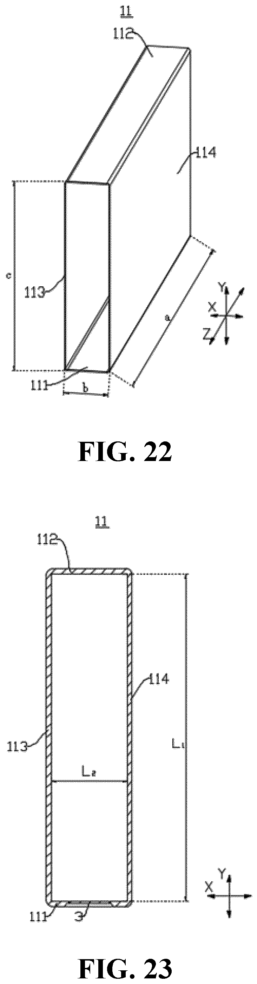

In some embodiments, referring to Fig. 22, Fig. 22 is an axonometric drawing of a case 11 shown in Fig. 21. The case 11 includes a first wall portion 111, a second wall portion 112, a third wall portion 113, and a fourth wall portion 114. The first wall portion 111, the third wall portion 112, the second wall portion 113, and the fourth wall portion 114 are connected in sequence end to end. The first wall portion 111 and the second wall portion 112 are opposite to each other in the second direction Y. The third wall portion 113 and the fourth wall portion 114 are opposite to each other in the first direction X.

The second direction Y may be perpendicular to the first wall portion 111 and the second wall portion 112, and the first direction X may be perpendicular to the third wall portion 113 and the fourth wall portion 114. The first wall portion 111, the second wall portion 112, the third wall portion 113, and the fourth wall portion 114 may be located at four sides of a parallelogram respectively. For example, in the first wall portion 111, the second wall portion 112, the third wall portion 113, and the fourth wall portion 114, two adjacent wall portions are perpendicular to each other.

In this embodiment, the case 11 is roughly in a shape of a quadrangular prism, has a simple structure, and is easy to form.

In some embodiments, referring to Fig. 23, Fig. 23 is a schematic structural diagram of the case 11 shown in Fig. 22. In the second direction Y, a distance between the first wall portion 111 and the second wall portion 112 is $L_1$; and in the first direction X, a distance between the third wall portion 113 and the fourth wall portion 114 is $L_2$, satisfying: $L_2 < L_1$.

In the second direction Y, the spacing between the first wall portion 111 and the second wall portion 112 is a minimum distance between an inner surface of the first wall portion 111 and an inner surface of the second wall portion 112. In the first direction X, the spacing between the third wall portion 113 and the fourth wall portion 114 is a minimum distance between an inner surface of the third wall portion 113 and an inner surface of the fourth wall portion 114.

In this embodiment, $L_2 < L_1$. When the electrode assembly 2 expands, impact caused by the electrode assembly 2 on the first wall portion 111 and the second wall portion 112 is less than impact caused by the electrode assembly 2 on the third wall portion 113 and the fourth wall portion 114. Since the pressure relief mechanism 3 is located on the first wall portion 111, a probability that the expansion of the electrode assembly 2 blocks or damages the pressure relief mechanism 3 can be reduced.

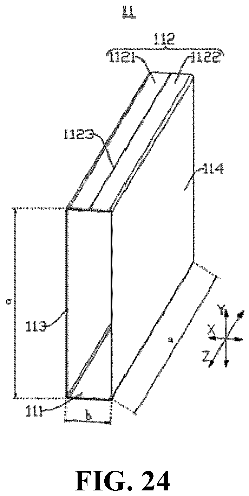

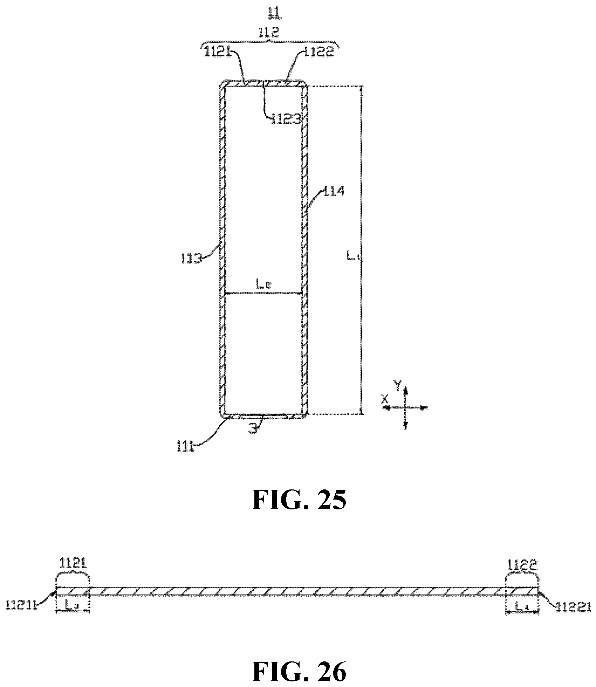

In some embodiments, referring to Fig. 24 to Fig. 26, Fig. 24 is an axonometric drawing of a case 11 according to some other embodiments of the present application; Fig. 25 is a schematic structural diagram of the case 11 shown in Fig. 24; Fig. 26 is a schematic structural diagram of the case 11 shown in Fig. 24 after the case is unfolded. The case 11 is formed by bending a plate, and head and tail end portions of the plate are connected to each other in a circumferential direction of the opening.

The case 11 including the first wall portion 111, the third wall portion 113, the second wall portion 112, and the fourth wall portion 114 which are connected end to end is taken as an example. The first wall portion 111, the third wall portion 113, the second wall portion 112, and the fourth wall portion 114 are arranged in sequence in the circumferential direction of the opening.

In the circumferential direction of the opening, the head and tail end portions of the plate are respectively a first end portion 1121 and a second end portion 1122. As shown in Fig. 26, before the case 11 is formed, the plate has two opposite end surfaces. The two end surfaces are respectively a first end surface 11211 and a second end surface 11221. A portion of the plate that deviates from the first end surface 11211 by a first preset distance $L_3$ towards the first end surface 11211 is the first end portion 1121 of the plate, and a length of the first end portion 1121 is equal to the first preset distance $L_3$. A portion of the plate that deviates from the second end surface 11221 by a second preset distance $L_4$ towards the first end surface 11211 is the second end portion 1122 of the plate, and a length of the second end portion 1122 is equal to the second preset distance $L_4$. The first preset distance $L_3$ and the second preset distance $L_4$ may be equal or different.

The two end portions (the first end portion 1121 and the second end portion 1122) of the plate can be connected in various ways, such as welding, bonding, or hot-melt connection. A connection position 1123 of the two end portions may be located on any wall portion of the case 11. For example, the connection position 1123 of the two end portions is located on the first wall portion 111, the second wall portion 112, the third wall portion 113, or the fourth wall portion 114. Or, the connection position 1123 of the two end portions may be located at an intersection position of two adjacent wall portions of the case 11, and the intersection position is a corner region of the case 11.

To form the case 11, the plate is bent, and the head and tail end portions of the plate are connected to each other. The forming mode of the case 11 is simple, and the difficulty of forming the case 11 can be effectively lowered.

In some embodiments, a connection position 1123 of the two end portions is staggered from the first wall portion 111 in the circumferential direction of the opening.

It can be understood that the connection position 1123 is not located on the first wall portion 111. The connection position 1123 may be located on another wall portion of the case 11 except the first wall portion 111. For example, the connection position 1123 is located on the second wall portion 112, the third wall portion 113, or the fourth wall portion 114.

In this embodiment, the connection position 1123 is not located on the first wall portion 111, thereby reducing impact of the connection position 1123 on the pressure relief mechanism 3 and improving the reliability of the pressure relief mechanism 3.

In some embodiments, continuing to refer to Fig. 24 to Fig. 26, the case 11 includes the second wall portion 112. In the second direction Y, the first wall portion 111 and the second wall portion 112 are opposite to each other. The connection position 1123 of the two end portions is located at the second wall portion 112.

For example, the head and tail end portions of the plate jointly form the second wall portion 112. Namely, one portion of the second wall portion 112 is the first end portion 1121, and the other portion of the second wall portion 112 is the second end portion 1122. End surfaces of the two end portions are connected to each other, and a joint of the end surfaces of the two end portions forms the connection position 1123. Namely, a first end surface 11211 of the first end portion 1121 is connected to a second end surface 11221 of the second end portion 1122.

For example, the two end portions are welded. During welding, the welding may be performed along a weld formed between the first end surface 11211 and the second end surface 11221.

In this embodiment, the pressure relief mechanism 3 and the connection position 1123 are respectively located on the first wall portion 111 and the second wall portion 112 that are opposite to each other, and the pressure relief mechanism 3 and the connection position 1123 are spaced apart farther in the circumferential direction of the opening, which further reduces the impact of the connection position 1123 on the pressure relief mechanism 3. In the embodiment of $L_2 < L_1$, when the electrode assembly 2 expands, the first wall portion 111 and the second wall portion 112 are less affected by the electrode assembly 2 than the third wall portion 113 and the fourth wall portion 114, so that deformations of the first wall portion 111 and the second wall portion 112 are smaller than deformations of the third wall portion 113 and the fourth wall portion 114. Since the connection position 1123 is located at the second wall portion 112, the impact of the expansion of the electrode assembly 2 on the connection position 1123 can be reduced, and a probability that the case 11 is damaged at the connection position 1123 due to the expansion of the electrode assembly 2 is lowered.

In some embodiments, the case 11 is a cuboid case, and the opening is formed at at least one end of the case 11 in a length direction of the case 11.

For example, openings are formed in two ends of the case 11 in the third direction Z, and the third direction Z is the length direction of the case 11. The case 11 includes the first wall portion 111, the third wall portion 113, the second wall portion 112 and the fourth wall portion 114 which are connected in sequence end to end. The first wall portion 111 and the second wall portion 112 are opposite to each other in the second direction Y, and the third wall portion 113 and the fourth wall portion 114 are opposite to each other in the first direction X. The first direction X is a width direction of the case 11, and the second direction Y is a height direction of the case 11.

In this embodiment, the case 11 is a cuboid case with a simple structure and is easy to form. Since the case 11 is the cuboid case, for a traditional wound electrode assembly 2, a winding center line of the wound electrode assembly 2 extends in the length direction of the case 11. the discharged medium generated inside the electrode assembly 2 needs to be discharged from two ends of the electrode assembly 2 along the winding center line, and then reaches the pressure relief mechanism 3 from a gap between the electrode assembly 2 and a wall surface of the case 11. A path for the discharged medium to flow to the pressure relief mechanism 3 is long. Using a laminated electrode assembly 2 can effectively shorten the path for the discharged medium to reach the pressure relief mechanism 3, thereby improving the timeliness of pressure relief on the battery cell 10.

In some embodiments, referring to Fig. 22 and Fig. 24, a length of the case 11 is a; a width of the case 11 is b; and a height of the case 11 is c, $b \leq c \leq a/1.5$.

It can be understood that $a/c \geq 1.5$, and $a/c$ may any point value among 1.5, 2, 3, 4, and 5, or a value in a range between any two values. It can be $b < c$ or $b = c$. In the embodiments shown in Fig. 22 and Fig. 24, $b < c$.

In this embodiment, $a/c \geq 1.5$. The case 11 is long-strip-shaped, which can meet a high-capacity requirement of the battery cell 10. In the embodiment where the case 11 is formed by bending the plate, since the case 11 is long-strip-shaped, bending the plate to form the case 11 is easier than traditionally stamping or pulling a plate to form the case 11. The forming efficiency and the yield are higher, and particularly, the case is a thin-walled case with a wall thickness less than 0.6 mm.

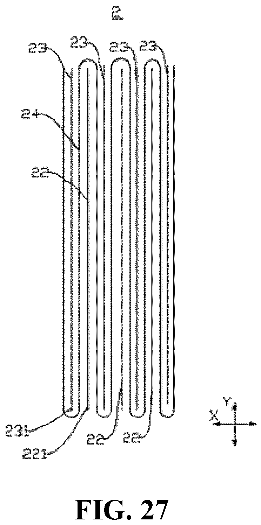

In some embodiments, referring to Fig. 27, Fig. 27 is a schematic structural diagram of an electrode assembly 2 according to some embodiments of the present application. The electrode assembly 2 includes a plurality of first electrode plates 22 and a plurality of second electrode plates 23. In the first direction X, the first electrode plates 22 and the second electrode plates 23 are alternately arranged. In the second direction Y, the first wall portion 111 (not shown in Fig. 27) faces edges of the first electrode plates 22 and edges of the second electrode plates 23.

the quantity of the first electrode plates 22 and the quantity of the second electrode plates 23 may be equal or different. For example, the quantity of the first electrode plates 22 is greater than or less than the quantity of the second electrode plates 23 by one. For example, in Fig. 27, the first electrode plates 22 are positive electrode plates, and the second electrode plates 23 are negative electrode plates. There is one second electrode plate 23 more than the first electrode plate 22, and one first electrode plate 22 is arranged between the two second electrode plates 23.

The electrode assembly 2 may further include a spacer 24. The spacer 24 is configured to insulate and isolate the first electrode plates 22 from the second electrode plates 23. For example, the spacer 24 is of a folded structure. The spacer 24 includes a plurality of partitions spaced apart from each other in the first direction X, and one partition is arranged between adjacent first electrode plate 22 and second electrode plate 23.

In Fig. 27, in the second direction Y, an edge of each first electrode plate 22 facing the first wall portion 111 is a first edge 221, and an edge of each second electrode plate 23 facing the first wall portion 111 is a second edge 231.

In this embodiment, both the first electrode plate 22 and the second electrode plate 23 are not of folded structures. Discharged mediums generated by the first electrode plate 22 and the second electrode plate 23 when the battery cell 10 has thermal runaway can quickly reach the pressure relief mechanism 3, which shortens time for the discharged mediums to reach the pressure relief mechanism 3 and improves the timeliness of pressure relief of the battery cell 10.

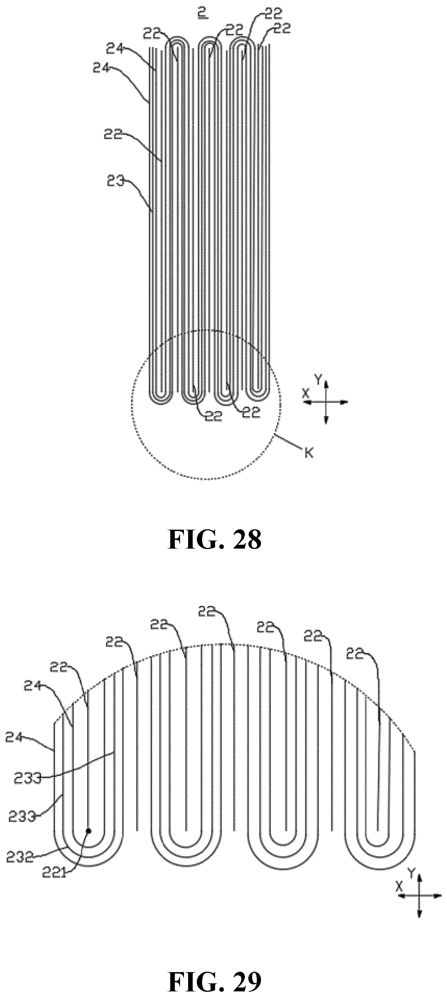

In some embodiments, referring to Fig. 28 and Fig. 29, Fig. 28 is a schematic structural diagram of an electrode assembly 2 according to some other embodiments of the present application; and Fig. 29 is a partially enlarged view of part K of the electrode assembly 2 shown in Fig. 28. The electrode assembly 2 includes a plurality of first electrode plates 22. The second electrode plate 23 includes bent portions 232 and a plurality of straight portions 233. Two adjacent straight portions 233 are connected to one bent portion 232. In the first direction X, the straight portions 233 and the first electrode plates 22 are alternately arranged. In the second direction Y, the first wall portion 111 (not shown in Fig. 28 and Fig. 29) faces edges of the first electrode plates 22 and the bent portions 232 of the second electrode plate 23.

The second electrode plate 23 is of a folded structure. The straight portions 233 are portions where the second electrode plate 23 and the first electrode plates 22 are stacked in the first direction X. The bent portions 232 are portions where the second electrode plate 23 is bent. One bent portion 232 connects two straight portions 233. The bent portion 232 may be arc-shaped. the quantity of the straight portions 233 in the second electrode plate 23 and the quantity of the first electrode plates 22 may be equal or different. For example, in Fig. 28 and Fig. 29, the first electrode plates 22 are positive electrode plates, and the second electrode plate 23 is a negative electrode plate. There is one straight portion 233 in the second electrode plate 23 more than the first electrode plate 22, and one first electrode plate 22 is arranged between two straight portions 233.

The electrode assembly 2 may further include a spacer 24. The spacer 24 is configured to insulate and isolate the first electrode plates 22 from the second electrode plates 23. For example, the spacer 24 is of a folded structure that is stacked and then folded together with the second electrode plate 23. Two spacers 24 are arranged in the electrode assembly 2. The two spacers 24 are respectively arranged on two sides of the second electrode plate 23 and are folded together with the second electrode plate 23.

In Fig. 29, in the second direction Y, an edge of each first electrode plate 22 facing the first wall portion 111 is a first edge 221. The first wall portion 111 faces the first edges 221, and faces the bent portions 232 at ends of the straight portions 233 close to the first wall portion 111.

During formation, the plurality of first electrode plates 22 can be arranged on two sides of the second electrode plate 23, and then the second electrode plate 23 can be folded back and forth, so that the second electrode plate 23 forms the straight portions 233 and the bent portions 232, thereby achieving alternate arrangement of the straight portions 233 and the first electrode plates 22. The forming mode of the electrode assembly 2 is simple, and the forming efficiency is high.

In some embodiments, the first wall portion 111 is configured to support the electrode assembly 2 in a gravity direction.

The second direction Y may be parallel to the gravity direction. In the second direction Y, the first wall portion 111 is located at a bottom of the electrode assembly 2. The first wall portion 111 may directly support the electrode assembly 2, so that the electrode assembly 2 is in direct contact with the first wall portion 111. The first wall portion 111 may also support the electrode assembly 2 through an intermediate element. For example, the first wall portion 111 supports the electrode assembly 2 through a first insulating member 5. For another example, the first wall portion 111 supports the electrode assembly 2 through a first insulating member 5 and a supporting member 7.

In this embodiment, the pressure relief mechanism 3 on the first wall portion 111 is located at the bottom of the electrode assembly 2, which is conductive for the discharged medium inside the battery cell 10 to be quickly discharged through the pressure relief mechanism 3 by virtue of its own gravity. When the battery cell 10 has thermal runaway, the battery cell 10 can discharge the discharged medium towards the bottom of the battery cell 10 through the pressure relief mechanism 3, thereby reducing a probability that the discharged medium damages an electrical element located at a top of the battery cell 10.

In some embodiments, the first direction X is perpendicular to the second direction Y.

The embodiments of the present application provide a battery 100, including the battery cell 10 provided in any one of the above embodiments.

The embodiments of the present application provide an electrical device, including the battery cell 10 provided by any one of the above embodiments. The battery cell 10 is configured to supply electric energy to the electric device.

Referring to Fig. 4 to Fig. 10, the embodiments of the present application further provides a battery cell 10. The battery cell 10 includes a shell 1, an electrode assembly 2, a pressure relief mechanism 3, electrode terminals 4, and a first insulating member 5. The electrode assembly 2 is accommodated in the shell 1. The electrode assembly 2 is a laminated electrode assembly 2. The electrode assembly 2 includes a spacer 24, and a first electrode plate 22 and a second electrode plate 23 that have opposite polarities. The spacer 24 is arranged between the first electrode plate 22 and the second electrode plate 23. The plurality of first electrode plates 22 and the plurality of second electrode plates 23 are stacked in a first direction X. The shell 1 includes a case 11 and end covers 12. The case 11 includes a first wall portion 111, a third wall portion 113, a second wall portion 112 and a fourth wall portion 114 which are connected in sequence end to end. The first wall portion 111 and the second wall portion 112 are opposite to each other in the second direction Y, and the third wall portion 113 and the fourth wall portion 114 are opposite to each other in the first direction X. In a third direction Z, openings are formed in two opposite ends of the case 11, and the end covers 12 are in one-to-one correspondence to the case 11. The end covers 12 close the openings of the case 11. The end covers 12 are provided with the electrode terminals 4. The electrode terminals 4 are electrically connected to tabs 21 of the electrode assembly 2. In the second direction Y, the first wall portion 111 faces edges of the first electrode plates 22 and edges of the second electrode plates 23. The pressure relief mechanism 3 is arranged at the first wall portion 111. Every two of the first direction X, the second direction Y, and the third direction Z are perpendicular to each other.

In the first direction X, a width of the pressure relief region 31 of the pressure relief mechanism 3 is D; a thickness of each first electrode plate 22 is $T_1$; a thickness of each second electrode plate 23 is $T_2$; a thickness of the spacer 24 is $T_3$; the first electrode plate 22 is a positive electrode plate; and the quantity of layers of the first electrode plates 22 in the electrode assembly 2 is N, satisfying: $4/3 \cdot N \cdot (T_1+T_2+2 \cdot T_3) \geq D \geq 1/3 \cdot N \cdot (T_1+T_2+2 \cdot T_3)$; $75\ \mu m \leq T_1 \leq 220\ \mu m$; $80\ \mu m \leq T_2 \leq 250\ \mu m$; $5\ \mu m \leq T_3 \leq 20\ \mu m$.

It should be noted that the embodiments in the present application and features in the embodiments may be mutually combined without conflicts.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

**Claims**

1. A battery cell, comprising:

    a shell, comprising a first wall portion; and
    an electrode assembly, accommodated in the shell, wherein the electrode assembly comprises a first electrode plate and a second electrode plate that have opposite polarities, and the first electrode plate and the second electrode plate are stacked in a first direction,
    wherein in a second direction, the first wall portion faces an edge of the first electrode plate and/or an edge of the second electrode plate; the second direction intersects with the first direction; and the first wall portion is provided with a pressure relief mechanism.

2. The battery cell according to claim 1, wherein in the first direction, a thickness of the electrode assembly is T, and a width of the pressure relief region of the pressure relief mechanism is D, satisfying: $D \geq 1/3 \cdot T$.

3. The battery cell according to claim 2, wherein $D \geq 1/2 \cdot T$.

4. The battery cell according to claim 2 or 3, wherein the shell has two first outer surfaces; the two first outer surfaces are opposite to each other in the first direction; the first wall portion has a second outer surface; the two first outer surfaces are connected to the second outer surface through a filleted corner surface; and
    in the first direction, a distance between the two first outer surfaces is W, and a radius of the filleted corner surface is R, satisfying: $D \leq W - 2 \cdot R$.

5. The battery cell according to any one of claims 1 to 4, wherein the electrode assembly further comprises a spacer; the spacer is arranged between the first electrode plate and the second electrode plate; the spacer is configured to insulate and isolate the first electrode plate from the second electrode plate;
    in the first direction, a width of the pressure relief region of the pressure relief mechanism is D; a thickness of the first electrode plate is $T_1$; a thickness of the second electrode plate is $T_2$; a thickness of the spacer is $T_3$; the first electrode plate is a positive electrode plate; and the quantity of layers of the first electrode plate in the electrode assembly is N, satisfying:

$$D \geq 1/3 \cdot N \cdot (T_1 + T_2 + 2 \cdot T_3).$$

6. The battery cell according to claim 5, wherein $D \leq 4/3 \cdot N \cdot (T_1 + T_2 + 2 \cdot T_3)$.

7. The battery cell according to claim 5 or 6, wherein $N \cdot (T_1 + T_2 + 2 \cdot T_3) \geq D \geq 1/2 \cdot N \cdot (T_1 + T_2 + 2 \cdot T_3)$.

8. The battery cell according to any one of claims 5 to 7, wherein $75\mu m \leq T_1 \leq 220\mu m$; and/or, $80\mu m \leq T_2 \leq 250\mu m$; and/or, $5\mu m \leq T_3 \leq 20\mu m$.

9. The battery cell according to any one of claims 1 to 8, wherein in the second direction, a projection of the electrode assembly completely covers the pressure relief region of the pressure relief mechanism.

10. The battery cell according to any one of claims 1 to 9, further comprising a first insulating member, wherein in the second direction, the first insulating member is at least partially arranged between the electrode assembly and the first wall portion.

11. The battery cell according to claim 10, wherein the first insulating member is provided with a first discharge region; and the first discharge region is configured to allow the discharged medium inside the battery cell to move from a side of the first insulating member facing away from the pressure relief mechanism to a side of the first insulating member facing the pressure relief mechanism.

12. The battery cell according to claim 11, wherein the first discharge region comprises a first through hole provided in the first insulating member.

13. The battery cell according to any one of claims 10 to 12, further comprising a supporting member, wherein in the second direction, the supporting member is at least partially arranged between the first insulating member and the first

22

wall portion; and the supporting member is configured to support the first insulating member and the electrode assembly.

14. The battery cell according to claim 13, wherein the supporting member is provided with a second discharge region; and the second discharge region is configured to allow the discharged medium inside the battery cell to move from a side of the supporting member facing away from the pressure relief mechanism to a side of the supporting member facing the pressure relief mechanism.

15. The battery cell according to claim 14, wherein the second discharge region comprises a second through hole provided in the supporting member.

16. The battery cell according to any one of claims 10 to 15, wherein the first insulating member is wrapped around the electrode assembly.

17. The battery cell according to any one of claims 1 to 16, wherein the pressure relief mechanism is integrally formed with the first wall portion.

18. The battery cell according to claim 17, wherein a groove is provided in an inner surface and/or an outer surface of the first wall portion, and a bottom wall of the groove forms the pressure relief mechanism.

19. The battery cell according to any one of claims 1 to 16, wherein the pressure relief mechanism and the first wall portion are separately arranged, and the pressure relief mechanism is mounted on the first wall portion.

20. The battery cell according to any one of claims 1 to 19, wherein the pressure relief mechanism is provided with a score groove; the score groove defines the pressure relief region; and the pressure relief region is configured to be opened upon pressure relief of the battery cell.

21. The battery cell according to claim 20, wherein the score groove is a groove extending along a closed trajectory.

22. The battery cell according to any one of claims 1 to 21, wherein the shell comprises:

a case, provided with an opening; and
an end cover, closing the opening,
wherein the first wall portion is formed on the case.

23. The battery cell according to claim 22, wherein the case comprises the first wall portion, a second wall portion, a third wall portion, and a fourth wall portion; the first wall portion, the third wall portion, the second wall portion, and the fourth wall portion are connected in sequence end to end; the first wall portion and the second wall portion are opposite to each other in the second direction; and the third wall portion and the fourth wall portion are opposite to each other in the first direction.

24. The battery cell according to claim 23, wherein in the second direction, a spacing between the first wall portion and the second wall portion is $L_1$; and in the first direction, a spacing between the third wall portion and the fourth wall portion is $L_2$, satisfying: $L_2 < L_1$.

25. The battery cell according to any one of claims 22 to 24, wherein the case is formed by bending a plate, and head and tail end portions of the plate are connected to each other in a circumferential direction of the opening.

26. The battery cell according to claim 25, wherein a connection position of the two end portions is staggered from the first wall portion in the circumferential direction of the opening.

27. The battery cell according to claim 25 or 26, wherein the case comprises a second wall portion; in the second direction, the first wall portion and the second wall portion are opposite to each other; and the connection position of the two end portions is located at the second wall portion.

28. The battery cell according to any one of claims 22 to 27, wherein the case is a cuboid case, and the opening is formed at at least one end of the case in a length direction of the case.

29. The battery cell according to claim 28, wherein a length of the case is a; a width of the case is b; and a height of the case is c, b≤c≤a/1.5.

30. The battery cell according to any one of claims 1 to 29, wherein the electrode assembly comprises a plurality of first electrode plates and a plurality of second electrode plates; in the first direction, the first electrode plates and the second electrode plates are alternately arranged; and
in the second direction, the first wall portion faces edges of the first electrode plates and edges of the second electrode plates.

31. The battery cell according to any one of claims 1 to 29, wherein the electrode assembly comprises a plurality of first electrode plates; the second electrode plate comprises bent portions and a plurality of straight portions; two adjacent straight portions are connected to one bent portion; in the first direction, the straight portions and the first electrode plates are alternately arranged; and
in the second direction, the first wall portion faces edges of the first electrode plates and the bent portions of the second electrode plate.

32. The battery cell according to any one of claims 1 to 31, wherein the first wall portion is configured to support the electrode assembly in a gravity direction.

33. The battery cell according to any one of claims 1 to 32, wherein the first direction is perpendicular to the second direction.

34. A battery, comprising the battery cell according to any one of claims 1 to 33.

35. An electrical device, comprising the battery cell according to any one of claims 1 to 33, wherein the battery cell is configured to supply electric energy to the electric device.

1000

**FIG. 1**

100

**FIG. 2**

**FIG. 3**

FIG. 4

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

**FIG. 23**

**FIG. 24**

**FIG. 25**

**FIG. 26**

**FIG. 27**

**FIG. 28**

**FIG. 29**

## INTERNATIONAL SEARCH REPORT

| International application No. |
|---|
| **PCT/CN2023/114278** |

**A. CLASSIFICATION OF SUBJECT MATTER**

H01M50/30(2021.01)i; H01M50/103(2021.01)i; H01M50/342(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; USTXT; EPTXT; WOTXT; CNKI: 宁德时代, 防爆, 泄压, 安全, 排气, 层叠, 堆叠, 电芯, 电极组件, 卷绕体, 底壁, 侧壁, explosion proof, safety, valve, pressure relief, side, bottom, side, wall, electrode?, stack, assembly

**C. DOCUMENTS CONSIDERED TO BE RELEVANT**

| Category* | Citation of document, with indication, where appropriate, of the relevant passages | Relevant to claim No. |
|---|---|---|
| X | JP 2001257004 A (JAPAN STORAGE BATTERY CO., LTD.) 21 September 2001 (2001-09-21) description, paragraphs [0005]-[0034], and figures 1-6 | 1-35 |
| A | CN 217788574 U (NINGDE CONTEMPORARY AMPEREX TECHNOLOGY CO., LTD.) 11 November 2022 (2022-11-11) entire document | 1-35 |
| A | CN 218274967 U (NINGDE CONTEMPORARY AMPEREX TECHNOLOGY CO., LTD.) 10 January 2023 (2023-01-10) entire document | 1-35 |
| A | CN 215989098 U (NINGDE CONTEMPORARY AMPEREX TECHNOLOGY CO., LTD.) 08 March 2022 (2022-03-08) entire document | 1-35 |
| A | CN 103579535 A (SAMSUNG SDI CO., LTD.) 12 February 2014 (2014-02-12) entire document | 1-35 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 September 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114278**

| Patent document cited in search report | | | Publication date (day/month/year) | Patent family member(s) | | | Publication date (day/month/year) |
|---|---|---|---|---|---|---|---|
| JP | 2001257004 | A | 21 September 2001 | None | | | |
| CN | 217788574 | U | 11 November 2022 | None | | | |
| CN | 218274967 | U | 10 January 2023 | None | | | |
| CN | 215989098 | U | 08 March 2022 | WO | 2023000202 | A1 | 26 January 2023 |
| | | | | KR | 20230023758 | A | 17 February 2023 |
| | | | | EP | 4145612 | A1 | 08 March 2023 |
| | | | | US | 2023155233 | A1 | 18 May 2023 |
| CN | 103579535 | A | 12 February 2014 | KR | 20140020482 | A | 19 February 2014 |
| | | | | KR | 101907215 | B1 | 11 October 2018 |
| | | | | US | 2014045000 | A1 | 13 February 2014 |
| | | | | US | 8974931 | B2 | 10 March 2015 |
| | | | | EP | 2696387 | A1 | 12 February 2014 |
| | | | | EP | 2696387 | B1 | 27 September 2017 |
| | | | | JP | 2014036014 | A | 24 February 2014 |
| | | | | JP | 6178064 | B2 | 09 August 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103010199